# EUROPEAN PATENT SPECIFICATION

(11) **EP 3 676 831 B1**
(45) Date of publication and mention of the grant of the patent: **17.04.2024**
(21) Application number: 19702760.0
(22) Date of filing: 11.01.2019
(51) Int. Cl.: G10L 15/22, G10L 15/18, G06F 21/62, G06F 21/31

(54) **NATURAL LANGUAGE USER INPUT PROCESSING RESTRICTION**
VERARBEITUNGSBESCHRÄNKUNG NATÜRLCHSPRACHLICHER BENUTZEREINGABEN
LIMITATION DE TRAITEMENT D'ENTRÉE EN LANGUE NATURELLE D'UTILISATEUR

(30) Priority: 31.01.2018 US 201815884907
(43) Date of publication of application: 08.07.2020
(73) Proprietor: Amazon Technologies Inc., Seattle, WA 98108-1226 (US)
(72) Inventor: BAO, Yu, Seattle, Washington 98109-5210 (US)
(74) Representative: D Young & Co LLP
(86) International application number: PCT/US2019/013239
(87) International publication number: WO 2019/152162

(56) References cited:
- WO-A1-2018/005334
- WO-A1-2018/009397
- US-A1- 2016 117 670
- US-B1- 9 405 741
- US-B2- 8 099 278
- US-B2- 9 668 024

## Description

### CROSS-REFERENCE TO RELATED APPLICATION DATA

This application claims priority to U.S. Patent Application No. 15/884,907, entitled "User Input Processing Restriction In A Speech Processing System," filed on January 31, 2018, in the names of Yu Bao.

### BACKGROUND

Speech recognition systems have progressed to the point where humans can interact with computing devices using their voices. Such systems employ techniques to identify the words spoken by a human user based on the various qualities of a received audio input. Speech recognition processing combined with natural language understanding processing enable speech-based user control of a computing device to perform tasks based on the user's spoken commands. The combination of speech recognition processing and natural language understanding processing techniques is referred to herein as speech processing. Speech processing may also involve converting a user's speech into text data which may then be provided to speechlets.

Speech processing may be used by computers, hand-held devices, telephone computer systems, kiosks, and a wide variety of other devices to improve human-computer interactions.

WO 2018/005334 A1 relates to systems and methods for routing content to an associated output device including receiving audio data representing a command from a first electronic device, determining content that is associated with the command, sending responsive audio data to the first electronic device, and sending instruction to the second electronic device to output the content associated with the command.

US 9 405 741 B1 relates to features for recognizing inappropriate content in an output. The offensive content may be generated as a result of a speech processing error and the system may identify the inappropriate elements of a generated output and select among different appropriate alternatives.

WO 2018/009397 A1 relates to systems and method for customizing smart home speech interfaces using personalized speech profiles.

US 2016/117670 A1 relates to facilitating sending and receiving of payments using message-based contextual prompts.

US 9 668 024 B2 relates to systems and processes for controlling television user interactions using a virtual assistant.

US 8 099 278 B2 relates to age determination using speech.

### SUMMARY

According to the invention, there are provided a system and a method, as set forth in the appended independent claims 1 and 10. Preferred embodiments of the invention are set forth in the appended dependent claims.

### BRIEF DESCRIPTION OF DRAWINGS

For a more complete understanding of the present disclosure, reference is now made to the following description taken in conjunction with the accompanying drawings, wherein the embodiments referred to in the following are for illustrative purposes, but not limiting the invention which is defined by the appended claims.
FIG. 1 illustrates a system configured with a device associated with child user permissions according to embodiments of the present disclosure.
FIG. 2 illustrates a system configured with a child profile according to embodiments of the present disclosure.
FIG. 3 is a conceptual diagram of components of a system according to embodiments of the present disclosure.
FIG. 4 is a conceptual diagram of how natural language understanding processing is performed according to embodiments of the present disclosure.
FIG. 5 is a conceptual diagram of how natural language understanding processing is performed according to embodiments of the present disclosure.
FIG. 6 is a schematic diagram of an illustrative architecture in which sensor data is combined to recognize one or more users according to embodiments of the present disclosure.
FIG. 7 is a system flow diagram illustrating user recognition processing according to embodiments of the present disclosure.
FIG. 8 is a system flow diagram illustrating policy evaluation processing according to embodiments of the present disclosure.
FIG. 9 illustrates access policy data stored by an access policy storage according to embodiments of the present disclosure.
FIG. 10 illustrates access policy data stored by an access policy storage according to embodiments of the present disclosure.
FIG. 11 is a system flow diagram illustrating post-policy evaluation processing according to embodiments of the present disclosure.
FIG. 12 is a block diagram conceptually illustrating example components of a device according to embodiments of the present disclosure.
FIG. 13 is a block diagram conceptually illustrating example components of a server according to embodiments of the present disclosure.
FIG. 14 illustrates an example of a computer network for use with the speech processing system.

### DETAILED DESCRIPTION

The invention is set out in the appended set of claims.

Automatic speech recognition (ASR) is a field of computer science, artificial intelligence, and linguistics concerned with transforming audio data representing speech into text data representative of that speech. Natural language understanding (NLU) is a field of computer science, artificial intelligence, and linguistics concerned with enabling computers to derive meaning from text data containing natural language. Text-to-speech (TTS) is a field of computer science, artificial intelligence, and linguistics concerned with enabling computers to output synthesized speech. ASR, NLU, and TTS may be used together as part of a speech processing system.

Speech processing systems are becoming increasingly prevalent. A speech processing system may include a voice user interface (VUI) that enables users to verbally request the performance of actions and the output of content. A user may speak an utterance to a device, the device may send audio representing the utterance to a distributed system, and the distributed system may process the audio to determine a response (e.g., action and/or content requested by the user). For example, a user may say "play jazz music" and the system may determine the user wants jazz music to be output. For further example, a user may say "book me a ride" and the system may determine the user desires a ride sharing trip be booked.

Increasing kinds of users may use speech processing systems as such systems become more robust. For example, as devices for speech processing become more common children may become regular users of such devices.

A speech processing system may include multiple skills. Each skill may be configured to perform various actions and/or provide various kinds of information. For example, a shopping skill may be configured to order products and/or services and a weather skill may be configured to provide weather information. For some speech processing systems, new skills can be created and, therefore, more information and actions continue to become available to users via speech processing systems.

It may be undesirable to allow all users to access, without restriction, all possible responses, including all actions and/or content a speech processing system may provide. For example, it may be undesirable for a child to cause a speech processing system to purchase a product or service, book a ride with a ride sharing skill, output explicit content (e.g., music or videos), etc.

The present disclosure leverages features of a speech processing system to filter content and/or actions available to users, in particular users determined to be a child. A device may be configured as a "child device" at a device identifier (ID) level. Thus the device may be associated with children and commands to it may be processed in a manner consistent with safe and appropriate commands for children. For example, when a user (e.g., an adult user or a child user) speaks an utterance to a child device, the system may process the utterance using ASR and NLU techniques that are part of the speech processing system, but the ultimate execution of the command of the utterance may include determining child appropriate content / actions based on the invoked device being a child device. For example, if a user says "play music" to a child device, the system may determine the request to play music, determine that the device is indicated to be a child device, and may identify child appropriate music and output same.

In addition to including child devices, a system may also incorporate child profiles. When a user speaks an utterance to a device, the system may identify the user, determine an age (or age range) of the user, and execute a command of the utterance in a way that determines content / commands appropriate for the user's age. For example, if a user says "play music" to a device that is not configured as a child device, the system may determine the user is a child, determine child appropriate music, and output same.

The system may be configured such that child users may be restricted to invoking certain skills. For example, the system may be configured such that child users may be able to invoke music skills but not shopping skills.

The system may also be configured such that child users may be restricted to invoking certain functionality of a single skill. For example, the system may be configured with a smart home skill and child users may be able to cause the smart home skill to turn on/off lights but not unlock doors.

The system may include restrictions that apply uniformly to each child user and/or child device. In addition, the system may include restrictions that are unique to a specific child profile and/or device. Such unique restrictions may be generated by adult users associated with a specific child user (e.g., a parent setting up permissions for a child). Different permissions may be configured for different users. For example, one child user may be able to invoke more smart home skill functionality than another child user.

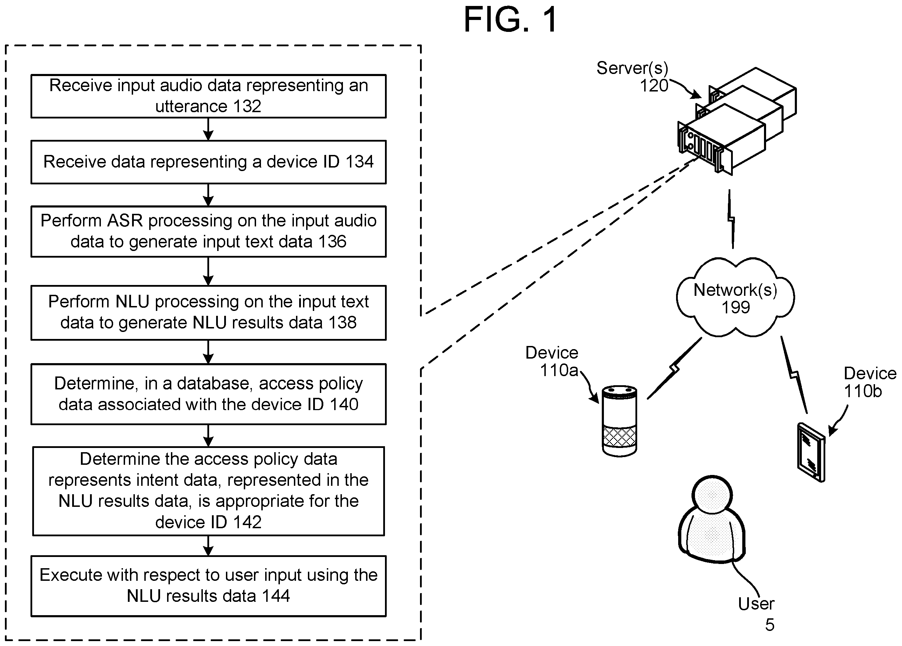

FIG. 1 illustrates a system configured with a child device. Although the figures and discussion of the present disclosure illustrate certain operational steps of the system in a particular order, the steps described may be performed in a different order (as well as certain steps removed or added) without departing from the intent of the disclosure. Devices (110a/110b) local to a user 5 and one or more server(s) 120 may communicate across one or more networks 199.

The user 5 may speak an utterance, in natural language (i.e., as if the user was speaking to another person), to the device 110a. The device 110a in this example may be considered a "child device." A child device, according to the present disclosure, may be in a product form recognizable as a child device, or may be a "traditional" system device but the system keeps track of the device's ID as being a child device such that commands received from the device 110a are executed using the techniques disclosed herein.

The device 110a may generate input audio data representing the utterance and send the input audio data to the server(s) 120, which the server(s) 120 receives (132). The device 110a may also send data representing a device identifier (ID) of the device 110a to the server(s) 120, which the server(s) 120 receives (134). The server(s) 120 performs (136) ASR processing on the input audio data to generate input text data.

Alternatively, the user 5 may provide text input (e.g., via a virtual or other keyboard) to the device 110b. The input text data may be in natural language (i.e., as if the user was typing to another person). The device 110b in this example may be considered a "child device." The device 110b may be in a product form recognizable as a child device (e.g., a child marketed tablet computer), or may be a "traditional" system device but the system keeps track of the device's ID as being a child device such that commands received from the device 110b are executed using the techniques disclosed herein. The device 110b may generate input text data representing the input text and send the input text data to the server(s) 120 via a companion application downloaded on and executed by the device 110b.

The server(s) 120 performs (138) NLU processing on the input text data (e.g., either generated by ASR processing or received from the device 110b) to generate NLU results data. The NLU results data includes intent data representing a derived intent of the utterance or user text input. For example, the intent data may correspond to <PlayMusic> if the derived intent is for music to be played, <BookRide> if the derived intent is for a ride sharing ride to be booked, etc.

The server(s) 120 determines (140), in a database storing access policy data, access policy data associated with the device ID, if any. The server(s) 120 then determines whether the intent data is represented in the access policy data associated with the device ID. Intent data represented in the access policy data may correspond to intents that are inappropriate for a user of the device to invoke (e.g., intents that children are not authorized to invoke). If the server(s) 120 determines (142) the access policy data represents the intent data (representing the present user input) is appropriate for the device ID, the server(s) 120 executes (144) with respect to the user input using the NLU results data. In some instances, executing with respect to the user input may include performing an action (e.g., booking a ride sharing transport, ordering a pizza, turning on a light, unlocking a door, etc.). In other situations, executing with respect to the user input may include determining output content (e.g., music, an audio book, text of a recipe, etc.).

At step 142, the server(s) 120 may determine the access policy data represents the intent data is appropriate in various manners. If the access policy data corresponds to a white list of authorized intents, the server(s) 120 may determine the intent data is appropriate by determining the access policy data represents the intent data. If the access policy data corresponds to a black list of unauthorized intents, the server(s) 120 may determine the intent data is appropriate by determining the access policy does not represent the intent data.

As described above, the server(s) 120 may receive a device ID from a device 110 and may determine one or more access policies associated with the device ID. Alternatively, the server(s) 120 may receive data representing a device ID from a device 110, determine the data is associated with the device ID in a database, and thereafter determine one or more access policies associated with the device ID. Moreover, the server(s) 120 may receive data representing a type of device 110 and determine one or more access policies associated with the type of device 110. In addition, the server(s) 120 may receive data representing a device ID from a device 110, determine the device ID is associated with a device type ID in a database, and thereafter determine one or more access policies associated with the device type ID. A storage requirement for access policies may be reduced if some or all of the stored access policies are associated with device types rather than specific device IDs.

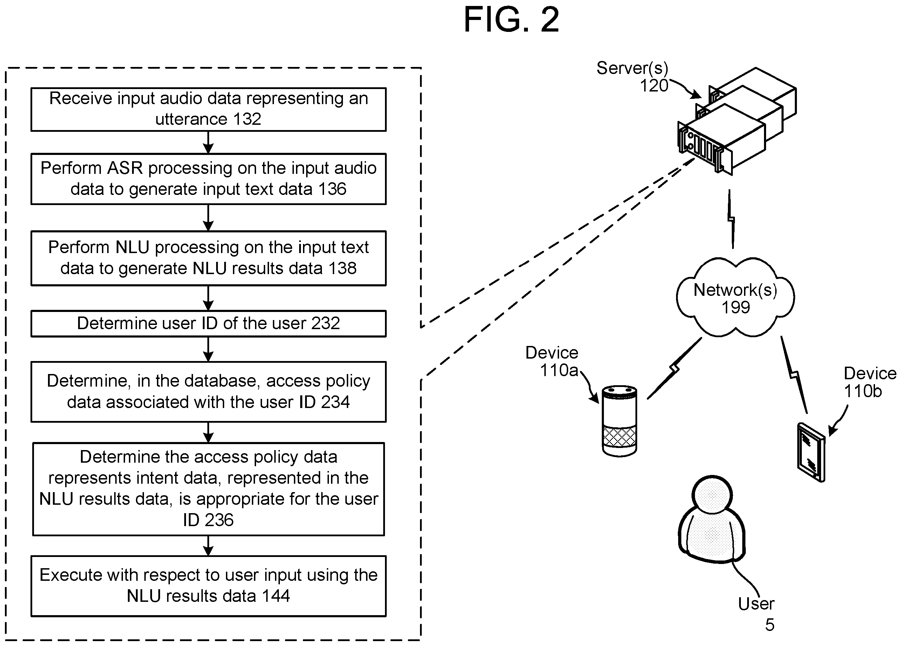

As described with respect to FIG. 1, a system may be configured with a child device and associated child device access policies such that a user interacting with the system using the child device will be restricted to receiving certain content and/or invoking certain actions. FIG. 2 illustrates a system configured with a child profile such that a specific user of the system will be restricted to receiving certain content and/or invoking certain actions, regardless of the device 110 the user interacts with.

The server(s) 120 may receive (132) input audio data representing a spoken utterance of the user 5 and may perform (136) ASR processing on the input audio data to generate input text data. Alternatively, the server(s) 120 may receive input text data from the device 110b via the companion application. The server(s) performs (138) NLU processing on the input text data (e.g., either generated by ASR processing or received from the device 110b) to generate NLU results data. As described above, the NLU results data includes intent data representing a derived intent of the utterance or user text input.

The server(s) 120 determines (232) a user identifier (ID) of the user 5. If the server(s) 120 received input audio data representing the utterance, the server(s) 120 may determine audio characteristics representing the utterance and may compare the audio characteristics to stored audio characteristics of various users of the system to identify the user's stored audio characteristics. Stored audio characteristics may be associated with a respective user ID. Other techniques for determining an identity of the user 5 and corresponding user ID are described in detail below.

The server(s) 120 determines (234), in the database storing access policy data, access policy data associated with the user ID, if any. The server(s) 120 then determines whether the intent data (represented in the NLU results data) is represented in the access policy data associated with the user ID. If the server(s) 120 determines (236) the access policy data represents the intent data (representing the present user input) is appropriate for the user ID, the server(s) 120 executes (144) with respect to the user input using the NLU results data..

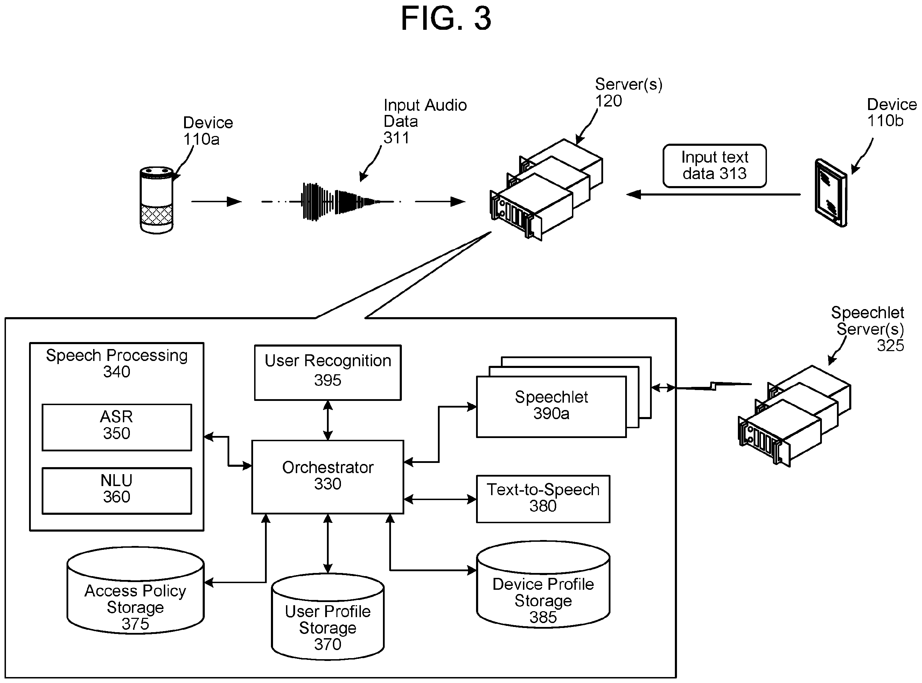

The system may operate using various components as described in FIG. 3. The various components may be located on a same or different physical devices. Communication between various components may occur directly or across a network(s) 199.

The device 110a may send input audio data 311 to the server(s) 120. Upon receipt by the server(s) 120, the input audio data 311 may be sent to an orchestrator component 330. The orchestrator component 330 may include memory and logic that enables the orchestrator component 330 to transmit various pieces and forms of data to various components of the system, as well as perform other operations as described herein.

The orchestrator component 330 sends the input audio data 311 to a speech processing component 340. An ASR component 350 of the speech processing component 340 transcribes the input audio data 311 into input text data. The input text data output by the ASR component 350 represents one or more than one (e.g., in the form of an N-best list) hypotheses representing an utterance represented in the input audio data 311. The ASR component 350 interprets the utterance in the input audio data 311 based on a similarity between the input audio data 311 and pre-established language models. For example, the ASR component 350 may compare the input audio data 311 with models for sounds (e.g., subword units, such as phonemes, etc.) and sequences of sounds to identify words that match the sequence of sounds of the utterance represented in the input audio data 311. The ASR component 350 sends the input text data generated thereby to an NLU component 360 of the speech processing component 340. The input text data sent from the ASR component 350 to the NLU component 360 may include a top scoring hypothesis or may include an N-best list including multiple hypotheses. An N-best list may additionally include a respective score associated with each hypothesis represented therein. Each score may indicate a confidence of ASR processing performed to generate the hypothesis with which the score is associated.

Alternatively, the device 110b may send input text data 313 to the server(s) 120. Upon receipt by the server(s) 120, the input text data 313 may be sent to the orchestrator component 330. The orchestrator component 430 may send the input text data 313 to the NLU component 360.

The NLU component 360 attempts to make a semantic interpretation of the phrases or statements represented in the input text data input therein. That is, the NLU component 360 determines one or more meanings associated with the phrases or statements represented in the input text data based on words represented in the input text data. The NLU component 360 determines an intent representing an action that a user desires be performed as well as pieces of the input text data that allow a device (e.g., the device 110a, the device 110b, the server(s) 120, a speechlet 390, a speechlet server(s) 325, etc.) to execute the intent. For example, if the input text data corresponds to "play Adele music," the NLU component 360 may determine an intent that the system output Adele music and may identify "Adele" as an artist. For further example, if the input text data corresponds to "what is the weather," the NLU component 360 may determine an intent that the system output weather information associated with a geographic location of the device 110.

A "speechlet" may be software running on the server(s) 120 that is akin to a software application running on a traditional computing device. That is, a speechlet 390 may enable the server(s) 120 to execute specific functionality in order to provide data or produce some other requested output. The server(s) 120 may be configured with more than one speechlet 390. For example, a weather service speechlet may enable the server(s) 120 to provide weather information, a car service speechlet may enable the server(s) 120 to book a trip with respect to a taxi or ride sharing service, an order pizza speechlet may enable the server(s) 120 to order a pizza with respect to a restaurant's online ordering system, a communications speechlet may enable the system to perform messaging or multi-endpoint communications, etc. A speechlet 390 may operate in conjunction between the server(s) 120 and other devices such as a local device 110 in order to complete certain functions. Inputs to a speechlet 390 may come from speech processing interactions or through other interactions or input sources.

A speechlet 390 may include hardware, software, firmware, or the like that may be dedicated to a particular speechlet 390 or shared among different speechlets 390. A speechlet 390 may be part of the server(s) 120 (as illustrated in FIG. 3) or may be located at whole (or in part) with separate speechlet servers 325. A speechlet server(s) 325 may communicate with a speechlet 390 within the server(s) 120 and/or directly with the orchestrator component 330 or with other components. Unless expressly stated otherwise, reference to a speechlet, speechlet device, or speechlet component may include a speechlet component operating within the server(s) 120 (for example as speechlet 390) and/or speechlet component operating within a speechlet server(s) 325.

A speechlet 390 may be configured to perform one or more actions. An ability to perform such action(s) may sometimes be referred to as a "skill." That is, a skill may enable a speechlet 390 to execute specific functionality in order to provide data or produce some other output requested by a user. A particular speechlet 390 may be configured to execute more than one skill / action. For example, a weather service skill may involve a weather speechlet providing weather information to the server(s) 120, a car service skill may involve a car service speechlet booking a trip with respect to a taxi or ride sharing service, an order pizza skill may involve a restaurant speechlet ordering a pizza with respect to a restaurant's online ordering system, etc.

A speechlet 390 may be in communication with one or more speechlet servers 325 implementing different types of skills. Types of skills include home automation skills (e.g., skills that enable a user to control home devices such as lights, door locks, cameras, thermostats, etc.), entertainment device skills (e.g., skills that enable a user to control entertainment devices such as smart TVs), video skills, flash briefing skills, as well as custom skills that are not associated with any pre-configured type of skill.

In certain instances, data provided by a speechlet 390 may be in a form suitable for output to a user. In other instances, data provided by a speechlet 390 may be in a form unsuitable for output to a user. Such an instance includes a speechlet 390 providing text data while audio data is suitable for output to a user.

The server(s) 120 may include a TTS component 380 that generates audio data from text data using one or more different methods. The audio data generated by the TTS component 380 may then be output by a device 110 as synthesized speech. In one method of synthesis called unit selection, the TTS component 380 matches text data against a database of recorded speech. The TTS component 380 selects matching units of recorded speech and concatenates the units together to form output audio data. In another method of synthesis called parametric synthesis, the TTS component 380 varies parameters such as frequency, volume, and noise to create output audio data including an artificial speech waveform. Parametric synthesis uses a computerized voice generator, sometimes called a vocoder.

The server(s) 120 may include a user profile storage 370. The user profile storage 370 may include a variety of information related to individual users, groups of users, etc. that interact with the system. The user profile storage 370 may include one or more customer profiles. Each customer profile may be associated with a different customer ID. A customer profile may be an umbrella profile specific to a group of users. That is, a customer profile encompasses two or more individual user profiles, each associated with a respective user ID. For example, a customer profile may be a household profile that encompasses user profiles associated with multiple users of a single household. A customer profile may include preferences shared by all the user profiles encompassed thereby. Each user profile encompassed under a single customer profile may additionally include preferences specific to the user associated therewith. That is, each user profile may include preferences unique from one or more other user profiles encompassed by the same customer profile. A user profile may be a stand-alone profile or may be encompassed under a customer profile. As illustrated, the user profile storage 370 is implemented as part of the server(s) 120. However, one skilled in the art will appreciate that the user profile storage 370 may be in communication with the server(s) 120, for example over the network(s) 199.

Each user profile may be associated with a respective user ID. A user profile may include various information, such as one or more device IDs representing devices associated with the user profile; information representing various characteristics of a user associated with the user profile, such as the user's age; information representing an age range to which a user associated with the user profile belongs; and/or a flag or other indication representing whether the user profile corresponds to a child user profile.

The server(s) 120 may include a device profile storage 385. Alternatively, the device profile storage 385 may be in communication with the server(s) 120, for example over the network(s) 199. The device profile storage 385 may include device profiles associated with respective devices 110. Each device profile may be associated with a respective device ID. A device profile may include various information, such as one or more user IDs representing user profiles associated with the device profile; location information representing a location (e.g., geographic location or location within a building) of a device 110 associated with the device profile; Internet Protocol (IP) address information; and/or a flag or other indication representing whether the device profile corresponds to a child device profile.

The server(s) 120 may include a user recognition component 395 that recognizes one or more users associated with data input to the system, as described below.

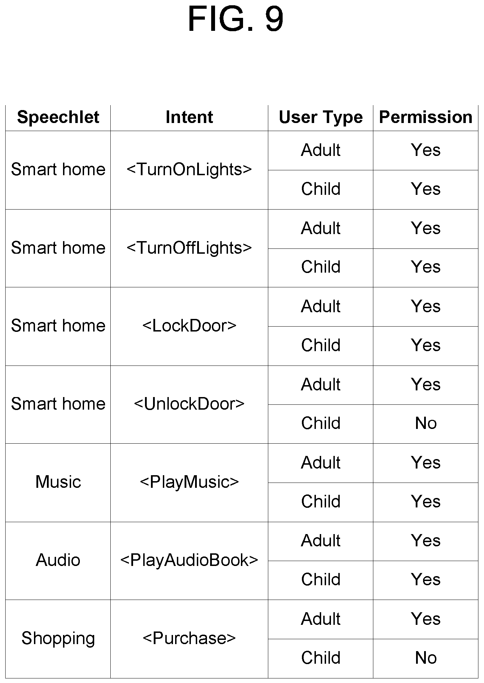

The server(s) 120 may include an access policy storage 375 that stores access policy data. A single access policy may be a system level access policy in that the access policy may be defaulted to be associated with all child device IDs and/or child user IDs of the system. For example, as illustrated in FIG. 9, system level access policies may prevent a device associated with a child device ID and/or child user associated with a child user ID from invoking a <Purchase> intent of a shopping speechlet or a <UnlockDoor> intent of a smart home speechlet, while enabling the same device to invoke other intents associated with other speechlets. A system level access policy for a specific intent of a specific speechlet 390 may be provided to the system by a developer of the speechlet 390 (or associated skill) or otherwise configured for operation with the system. As described, a system level access policy may be a default access policy. As such, a system level access policy may be altered by an adult user as described below.

The system may be configured to incorporate user permissions and may only perform activities disclosed herein if approved by a user. As such, the sensors, systems, and techniques described herein would be typically configured to restrict processing where appropriate and only process user information in a manner that ensures compliance with all appropriate laws, regulations, standards, and the like. For example, the system may only receive and store child-related information (e.g., information required to interact with the user interface of the system) in a manner consistent with user permissions (e.g., with verified parental consent) and in accordance with applicable laws (e.g., the Children's Online Privacy Protection Act of 1998 (COPPA), the Children's Internet Protection Act (CIPA), etc.). The system and techniques can be implemented on a geographic basis to ensure compliance with laws in various jurisdictions and entities in which the component(s) of the system(s) and/or user are located.

The access policy storage 375 may also store device ID and/or user ID specific access policies. Such access policies may be created based on input received from a user having authority to control access policies (e.g., an adult user having an adult user profile ID associated with a child device ID and/or child user ID). An adult user may control the access policies associated with a specific child device ID and/or child user ID via a companion application or website associated with the system. For example, a companion application or website may provide the adult user with intents enabled with respect to a specific child device ID and/or child user ID. The adult user may control which enabled intents may be accessed by a user of a device (associated with the child device ID) and/or a user associated with the child user ID. When an adult user provides input representing a child device ID and/or child user ID should be unable to invoke a specific intent, the system writes a corresponding access policy and stores same as access policy data in the access policy storage 375. An adult user may also speak, to the system, which intents should be enabled for a given user ID, device ID, or device type ID.

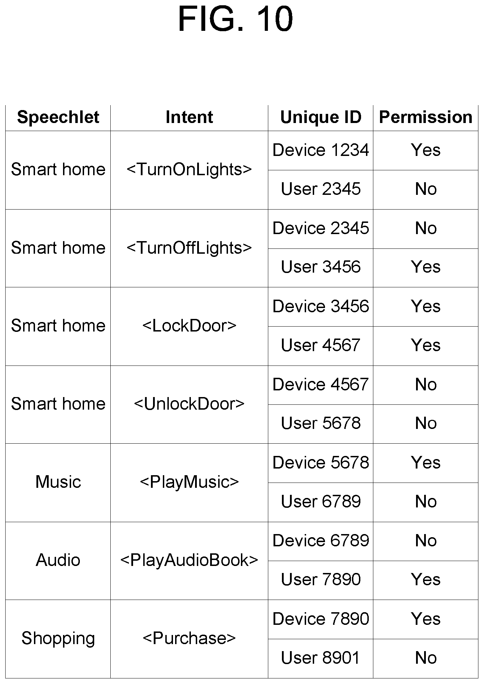

FIG. 10 illustrates device ID and user ID specific access policies that may be stored by the access policy storage 375. As illustrated, a speechlet and corresponding intent may be associated with device IDs and/or user IDs along with respective permissions. While FIG. 10 illustrates the access policies stored by the access policy storage 375 may include access policies representing when a specific unique ID is or is not permitted to invoke a specific intent, one skilled in the art will appreciate that the stored access policies may only represent when a specific unique ID is not permitted to invoke a specific intent. Conversely, in certain implementations, the stored access policies may only represent when a specific unique ID is permitted to invoke a specific intent. Thus, one skilled in the art will appreciate that access policy data in the access policy storage 375 may be represented in various forms including white lists, black lists, customized tables of permissions, permissions specific to certain times of day, etc.

As described, child access policies may be specific to intents. One skilled in the art will appreciate that child access policies may also be specific to speechlets 390 and/or skills. For example, an access policy may prevent a device associated with a child device ID and/or child user associated with a child user ID from invoking a shopping speechlet and/or skill.

In view of the foregoing, one skilled in the art will appreciate that the access policy data stored in the access policy storage 375 may be updated or otherwise altered in response to actions of a user of the system and/or system level access policy changes. Although the access policy data stored in the access policy storage 375 may be updated or otherwise altered, such may not affect speech processing performed by the server(s) 120 because, as described below, the access policy storage 375 may not be queried until post-NLU processing.

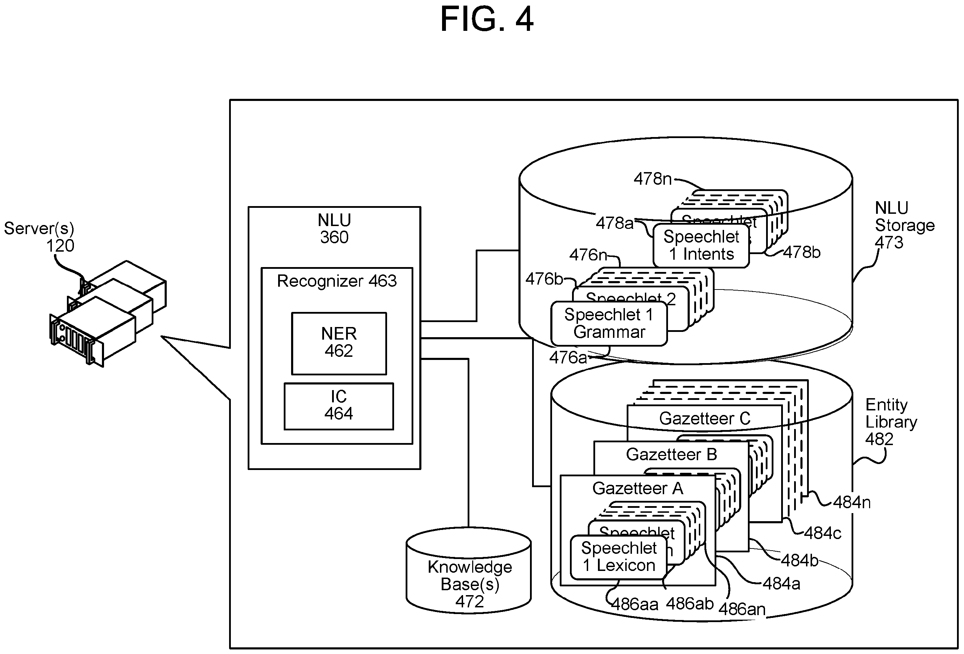

FIG. 4 illustrates how NLU processing is performed on input text data. Generally, the NLU component 360 attempts to make a semantic interpretation of text represented in text data input thereto. That is, the NLU component 360 determines the meaning behind text data based on the individual words and/or phrases represented therein. The NLU component 360 interprets text data to derive an intent or a desired action of the user input as well as pieces of the text data that allow a device (e.g., the device 110a, the device 110b, the server(s) 120, speechlet server(s) 325, etc.) to complete that action. For example, if the NLU component 360 receives text data corresponding to "tell me the weather," the NLU component 360 may determine that the user intends the system to output weather information.

The NLU component 360 may process text data including several hypotheses of a single spoken utterance. For example, if the ASR component 350 outputs text data including an N-best list of ASR hypotheses, the NLU component 360 may process the text data with respect to all (or a portion of) the ASR hypotheses represented therein. Even though the ASR component 350 may output an N-best list of ASR hypotheses, the NLU component 360 may be configured to only process with respect to the top scoring ASR hypothesis in the N-best list.

The NLU component 360 may annotate text data by parsing and/or tagging the text data. For example, for the text "tell me the weather for Seattle," the NLU component 360 may tag "Seattle" as a location for the weather information.

The NLU component 360 may include one or more recognizers 463. Each recognizer 463 may be associated with a different speechlet 390. Each recognizer 463 may process with respect to text data input to the NLU component 360. Each recognizer 463 may operate in parallel with other recognizers 463 of the NLU component 360.

Each recognizer 463 may include a named entity recognition (NER) component 462. The NER component 462 attempts to identify grammars and lexical information that may be used to construe meaning with respect to text data input therein. The NER component 462 identifies portions of text data that correspond to a named entity that may be applicable to processing performed by a speechlet 390 associated with the recognizer 463 implementing the NER component 462. The NER component 462 (or other component of the NLU component 360) may also determine whether a word refers to an entity whose identity is not explicitly mentioned in the text data, for example "him," "her," "it" or other anaphora, exophora or the like.

Each recognizer 463, and more specifically each NER component 462, may be associated with a particular grammar model and/or database 473, a particular set of intents/actions 478, and a particular personalized lexicon 486. Each gazetteer 484 may include speechlet-indexed lexical information associated with a particular user 5 and/or device 110. For example, a Gazetteer A (484a) includes speechlet-index lexical information 486aa to 486an. A user's music speechlet lexical information might include album titles, artist names, and song names, for example, whereas a user's contact list speechlet lexical information might include the names of contacts. Since every user's music collection and contact list is presumably different, this personalized information improves entity resolution.

An NER component 462 applies grammar models 476 and lexical information 486 associated with the speechlet 390 (associated with the recognizer 463 implementing the NER component 462) to determine a mention of one or more entities in text data. In this manner, the NER component 462 identifies "slots" (corresponding to one or more particular words in text data) that may be needed for later processing. The NER component 462 may also label each slot with a type (e.g., noun, place, city, artist name, song name, etc.).

Each grammar model 476 includes the names of entities (i.e., nouns) commonly found in speech about the particular speechlet 390 to which the grammar model 476 relates, whereas the lexical information 486 is personalized to the user 5 and/or the device 110 from which the input audio data 311 or input text data 313 originated. For example, a grammar model 476 associated with a shopping speechlet may include a database of words commonly used when people discuss shopping.

A downstream process called named entity resolution actually links a portion of text data to an actual specific entity known to the system. To perform named entity resolution, the NLU component 360 may utilize gazetteer information (484a-484n) stored in an entity library storage 482. The gazetteer information 484 may be used to match text data with different entities, such as song titles, contact names, etc. Gazetteers 484 may be linked to users (e.g., a particular gazetteer may be associated with a specific user's music collection), may be linked to certain speechlets 390 (e.g., a shopping speechlet, a music speechlet, a video speechlet, a communications speechlet, etc.), or may be organized in a variety of other ways.

Each recognizer 463 may also include an intent classification (IC) component 464. An IC component 464 parses text data to determine an intent(s), associated with the speechlet 390 (associated with the recognizer 463 implementing the IC component 464), that potentially represents the user input. An intent corresponds to an action to be performed that is responsive to the user input. An IC component 464 may communicate with a database 478 of words linked to intents. For example, a music intent database may link words and phrases such as "quiet," "volume off," and "mute" to a <Mute> intent. An IC component 464 identifies potential intents by comparing words and phrases in text data to the words and phrases in an intents database 478 associated with the speechlet 390 that is associated with the recognizer 463 implementing the IC component 464.

The intents identifiable by a specific IC component 464 are linked to speechlet-specific (i.e., the speechlet 390 associated with the recognizer 463 implementing the IC component 464) grammar frameworks 476 with "slots" to be filled. Each slot of a grammar framework 476 corresponds to a portion of text data that the system believes corresponds to an entity. For example, a grammar framework 476 corresponding to a <PlayMusic> intent may correspond to text data sentence structures such as "Play {Artist Name}," "Play {Album Name}," "Play {Song name}," "Play {Song name} by {Artist Name}," etc. However, to make resolution more flexible, grammar frameworks 476 may not be structured as sentences, but rather based on associating slots with grammatical tags.

For example, an NER component 462 may parse text data to identify words as subject, object, verb, preposition, etc. based on grammar rules and/or models prior to recognizing named entities in the text data. An IC component 464 (implemented by the same recognizer 463 as the NER component 462) may use the identified verb to identify an intent. The NER component 462 may then determine a grammar model 476 associated with the identified intent. For example, a grammar model 476 for an intent corresponding to <PlayMusic> may specify a list of slots applicable to play the identified "object" and any object modifier (e.g., a prepositional phrase), such as {Artist Name}, {Album Name}, {Song name}, etc. The NER component 462 may then search corresponding fields in a lexicon 486 associated with the speechlet 390, associated with the recognizer 463 implementing the NER component 462, attempting to match words and phrases in text data the NER component 462 previously tagged as a grammatical object or object modifier with those identified in the lexicon 486.

An NER component 462 may perform semantic tagging, which is the labeling of a word or combination of words according to their type / semantic meaning. An NER component 462 may parse text data using heuristic grammar rules, or a model may be constructed using techniques such as hidden Markov models, maximum entropy models, log linear models, conditional random fields (CRF), and the like. For example, an NER component 462 implemented by a music speechlet recognizer may parse and tag text data corresponding to "play mother's little helper by the rolling stones" as {Verb}: "Play," {Object}: "mother's little helper," {Object Preposition}: "by," and {Object Modifier}: "the rolling stones." The NER component 462 identifies "Play" as a verb based on a word database associated with the music speechlet, which an IC component 464 (also implemented by the music speechlet recognizer) may determine corresponds to a <PlayMusic> intent. At this stage, no determination has been made as to the meaning of "mother's little helper" and "the rolling stones," but based on grammar rules and models, the NER component 462 has determined that the text of these phrases relates to the grammatical object (i.e., entity) of the user input represented in the text data.

The frameworks linked to the intent are then used to determine what database fields should be searched to determine the meaning of these phrases, such as searching a user's gazetteer 484 for similarity with the framework slots. For example, a framework for a <PlayMusic> intent might indicate to attempt to resolve the identified object based on {Artist Name}, {Album Name}, and {Song name}, and another framework for the same intent might indicate to attempt to resolve the object modifier based on {Artist Name}, and resolve the object based on {Album Name} and {Song Name} linked to the identified {Artist Name}. If the search of the gazetteer 484 does not resolve a slot/field using gazetteer information, the NER component 462 may search a database of generic words associated with the speechlet 390 (in the knowledge base 472). For example, if the text data includes "play songs by the rolling stones," after failing to determine an album name or song name called "songs" by "the rolling stones," the NER component 462 may search the speechlet vocabulary for the word "songs." In the alternative, generic words may be checked before the gazetteer information, or both may be tried, potentially producing two different results.

An NER component 462 may tag text data to attribute meaning thereto. For example, an NER component 462 may tag "play mother's little helper by the rolling stones" as: {speechlet} Music, {intent} <PlayMusic>, {artist name} rolling stones, {media type} SONG, and {song title} mother's little helper. For further example, the NER component 462 may tag "play songs by the rolling stones" as: {speechlet} Music, {intent} <PlayMusic>, {artist name} rolling stones, and {media type} SONG.

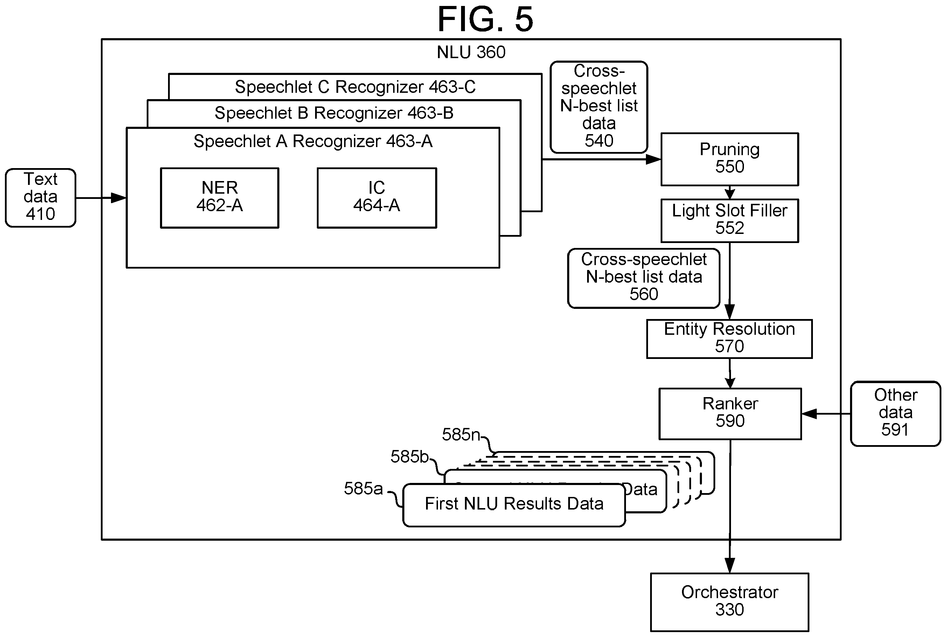

The NLU component 360 may generate cross-speechlet N-best list data 540 which may include a list of NLU hypotheses output by each recognizer 463 (as illustrated in FIG. 5). A recognizer 463 may output tagged text data generated by an NER component 462 and an IC component 464 operated by the recognizer 463, as described above. Each entry of tagged text data including intent indicator and text / slots called out by the NER component 462 may be grouped as an NLU hypothesis represented in the cross-speechlet N-best list data 540. Each NLU hypothesis may also be associated with one or more respective score(s) for the NLU hypothesis. For example, the cross-speechlet N-best list data 540 may be represented as, with each line representing an NLU hypothesis:
[0.95] Intent: <PlayMusic> ArtistName: Lady Gaga SongName: Poker Face
[0.95] Intent: <PlayVideo> ArtistName: Lady Gaga VideoName: Poker Face
[0.01] Intent: <PlayMusic> ArtistName: Lady Gaga AlbumName: Poker Face
[0.01] Intent: <PlayMusic> SongName: Pokerface

The NLU component 360 may send the cross-speechlet N-best list data 540 to a pruning component 550. The pruning component 550 may sort the entries of tagged text data represented in the cross-speechlet N-best list data 540 according to their respective scores. The pruning component 550 may then perform score thresholding with respect to the cross-speechlet N-best list data 540. For example, the pruning component 550 may select entries of tagged text data represented in the cross-speechlet N-best list data 540 associated with a confidence score satisfying (e.g., meeting and/or exceeding) a threshold confidence score. The pruning component 550 may also or alternatively perform number of tagged text data entry thresholding. For example, the pruning component 550 may select a maximum threshold number of top scoring tagged text data entries. The pruning component 550 may generate cross-speechlet N-best list data 560 including the selected tagged text data entries. The purpose of the pruning component 550 is to create a reduced list of tagged text data entries so that downstream, more resource intensive, processes may only operate on the tagged text data entries that most likely represent the user input.

The NLU component 360 may also include a light slot filler component 552. The light slot filler component 552 can take text data from slots represented in the tagged text data entries output by the pruning component 550 and alter it to make the text data more easily processed by downstream components. The light slot filler component 552 may perform low latency operations that do not involve heavy operations such as reference to a knowledge base. The purpose of the light slot filler component 552 is to replace words with other words or values that may be more easily understood by downstream system components. For example, if a tagged text data entry includes the word "tomorrow," the light slot filler component 552 may replace the word "tomorrow" with an actual date for purposes of downstream processing. Similarly, the light slot filler component 552 may replace the word "CD" with "album" or the words "compact disc." The replaced words are then included in the cross-speechlet N-best list data 560.

The NLU component 360 sends the cross-speechlet N-best list data 560 to an entity resolution component 570. The entity resolution component 570 can apply rules or other instructions to standardize labels or tokens from previous stages into an intent/slot representation. The precise transformation may depend on the speechlet 390. For example, for a travel speechlet, the entity resolution component 570 may transform text data corresponding to "Boston airport" to the standard BOS three-letter code referring to the airport. The entity resolution component 570 can refer to a knowledge base that is used to specifically identify the precise entity referred to in each slot of each tagged text data entry represented in the cross-speechlet N-best list data 560. Specific intent / slot combinations may also be tied to a particular source, which may then be used to resolve the text data. In the example "play songs by the stones," the entity resolution component 570 may reference a personal music catalog, Amazon Music account, user profile data, or the like. The entity resolution component 570 may output text data including an altered N-best list that is based on the cross-speechlet N-best list data 560, and that includes more detailed information (e.g., entity IDs) about the specific entities mentioned in the slots and/or more detailed slot data that can eventually be used by a speechlet 390. The NLU component 360 may include multiple entity resolution components 570 and each entity resolution component 570 may be specific to one or more speechlets 390.

The entity resolution component 570 may not be successful in resolving every entity and filling every slot represented in the cross-speechlet N-best list data 560. This may result in the entity resolution component 570 outputting incomplete results. The NLU component 360 may include a ranker component 590. The ranker component 590 may assign a particular confidence score to each tagged text data entry input therein. The confidence score of a tagged text data entry may represent a confidence of the system in the NLU processing performed with respect to the tagged text data entry. The confidence score of a particular tagged text data entry may be affected by whether the tagged text data entry has unfilled slots. For example, if a tagged text data entry associated with a first speechlet includes slots that are all filled/resolved, that tagged text data entry may be assigned a higher confidence score than another tagged text data entry including at least some slots that are unfilled/unresolved by the entity resolution component 570.

The ranker component 590 may apply re-scoring, biasing, or other techniques to determine the top scoring tagged text data entries. To do so, the ranker component 590 may consider not only the data output by the entity resolution component 570, but may also consider other data 591. The other data 591 may include a variety of information. The other data 591 may include speechlet 390 rating or popularity data. For example, if one speechlet 390 has a particularly high rating, the ranker component 590 may increase the score of a tagged text data entry output by a recognizer 463 associated with that speechlet 390. The other data 591 may also include information about speechlets 390 that have been enabled for the user ID and/or device ID associated with the current user input. For example, the ranker component 590 may assign higher scores to tagged text data entries output by recognizers 463 associated with enabled speechlets 390 than tagged text data entries output by recognizers 463 associated with non-enabled speechlets 390. The other data 591 may also include data indicating user usage history, such as if the user ID associated with the current user input is regularly associated with user input that invokes a particular speechlet 390 or does so at particular times of day. The other data 591 may additionally include data indicating date, time, location, weather, type of device 110, user ID, device ID, context, as well as other information. For example, the ranker component 590 may consider when any particular speechlet 390 is currently active (e.g., music being played, a game being played, etc.).

Following ranking by the ranker component 590, the NLU component 360 may output NLU results data 585 to the orchestrator component 330. The NLU results data 585 may include first NLU results data 585a including tagged text data associated with a first speechlet 390a, second NLU results data 585b including tagged text data associated with a second speechlet 390b, etc. The NLU results data 585 may include tagged text data corresponding to top scoring tagged text data entries (e.g., in the form of an N-best list) as determined by the ranker component 590. Alternatively, the NLU results data 585 may include tagged text data corresponding to the top scoring tagged text data entry as determined by the ranker component 390.

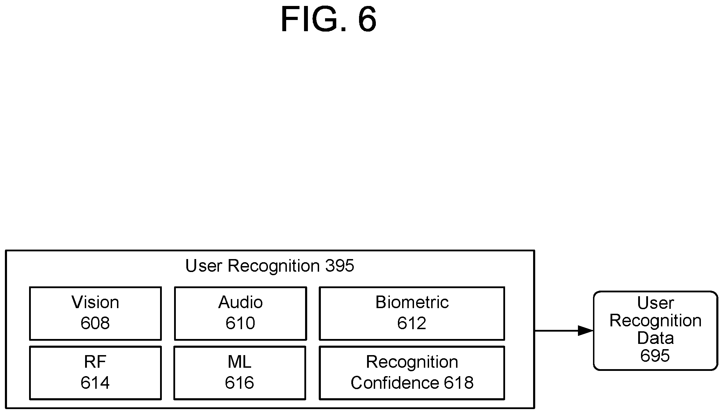

As detailed above, the server(s) 120 may include a user recognition component 395 that recognizes one or more users using a variety of data. As illustrated in FIG. 6, the user recognition component 395 may include one or more subcomponents including a vision component 608, an audio component 610, a biometric component 612, a radio frequency (RF) component 614, a machine learning (ML) component 616, and a recognition confidence component 618. In some instances, the user recognition component 395 may monitor data and determinations from one or more subcomponents to determine an identity of one or more users associated with data input to the system. The user recognition component 395 may output user recognition data 695, which may include a user ID associated with a user the system believes is originating data input to the system. The user recognition data 695 may be used to inform processes performed by the orchestrator 330 (or a subcomponent thereof) as described below.

The vision component 608 may receive data from one or more sensors capable of providing images (e.g., cameras) or sensors indicating motion (e.g., motion sensors). The vision component 608 can perform facial recognition or image analysis to determine an identity of a user and to associate that identity with user profile data associated with the user. In some instances, when a user is facing a camera, the vision component 608 may perform facial recognition and identify the user with a high degree of confidence. In other instances, the vision component 608 may have a low degree of confidence of an identity of a user, and the user recognition component 395 may utilize determinations from additional components to determine an identity of a user. The vision component 608 can be used in conjunction with other components to determine an identity of a user. For example, the user recognition component 395 may use data from the vision component 608 with data from the audio component 610 to identify what user's face appears to be speaking at the same time audio is captured by a device 110 the user is facing for purposes of identifying a user who spoke an utterance.

The system may include biometric sensors that transmit data to the biometric component 612. For example, the biometric component 612 may receive data corresponding to fingerprints, iris or retina scans, thermal scans, weights of users, a size of a user, pressure (e.g., within floor sensors), etc., and may determine a biometric profile corresponding to a user. The biometric component 612 may distinguish between a user and sound from a television, for example. Thus, the biometric component 612 may incorporate biometric information into a confidence level for determining an identity of a user. Biometric information output by the biometric component 612 can be associated with specific user profile data such that the biometric information uniquely identifies user profile data of a user.

The RF component 614 may use RF localization to track devices that a user may carry or wear. For example, a user (and user profile data associated with the user) may be associated with a computing device. The computing device may emit RF signals (e.g., Wi-Fi, Bluetooth^{®}, etc.). A device may detect the signal and indicate to the RF component 614 the strength of the signal (e.g., as a received signal strength indication (RSSI)). The RF component 614 may use the RSSI to determine an identity of a user (with an associated confidence level). In some instances, the RF component 614 may determine that a received RF signal is associated with a mobile device that is associated with a particular user ID.

In some instances, a device 110 may include some RF or other detection processing capabilities so that a user who speaks an utterance may scan, tap, or otherwise acknowledge his/her personal device (such as a phone) to the device 110. In this manner, the user may "register" with the system for purposes of the system determining who spoke a particular utterance. Such a registration may occur prior to, during, or after speaking of an utterance.

The ML component 616 may track the behavior of various users as a factor in determining a confidence level of the identity of the user. By way of example, a user may adhere to a regular schedule such that the user is at a first location during the day (e.g., at work or at school). In this example, the ML component 616 would factor in past behavior and/or trends into determining the identity of the user that provided input to the system. Thus, the ML component 616 may use historical data and/or usage patterns over time to increase or decrease a confidence level of an identity of a user.

In some instances, the recognition confidence component 618 receives determinations from the various components 608, 610, 612, 614, and 616, and may determine a final confidence level associated with the identity of a user. In some instances, the confidence level may determine whether an action is performed. For example, if a user input includes a request to unlock a door, a confidence level may need to be above a threshold that may be higher than a confidence level threshold needed to perform a user request associated with playing a playlist or sending a message. The confidence level or other score data may be included in the user recognition data 695.

The audio component 610 may receive data from one or more sensors capable of providing an audio signal (e.g., one or more microphones) to facilitate recognizing a user. The audio component 610 may perform audio recognition on an audio signal to determine an identity of the user and associated user ID. In some instances, aspects of the server(s) 120 may be configured at a computing device (e.g., a local server). Thus, in some instances, the audio component 610 operating on a computing device may analyze all sound to facilitate recognizing a user. In some instances, the audio component 610 may perform voice recognition to determine an identity of a user.

The audio component 610 may also perform user identification based on input audio data 311 input into the system for speech processing. The audio component 610 may determine scores indicating whether the input audio data 311 originated from particular users. For example, a first score may indicate a likelihood that the input audio data 311 originated from a first user associated with a first user ID, a second score may indicate a likelihood that the input audio data 311 originated from a second user associated with a second user ID, etc. The audio component 610 may perform user recognition by comparing audio characteristics representing the input audio data 311 to stored audio characteristics of users.

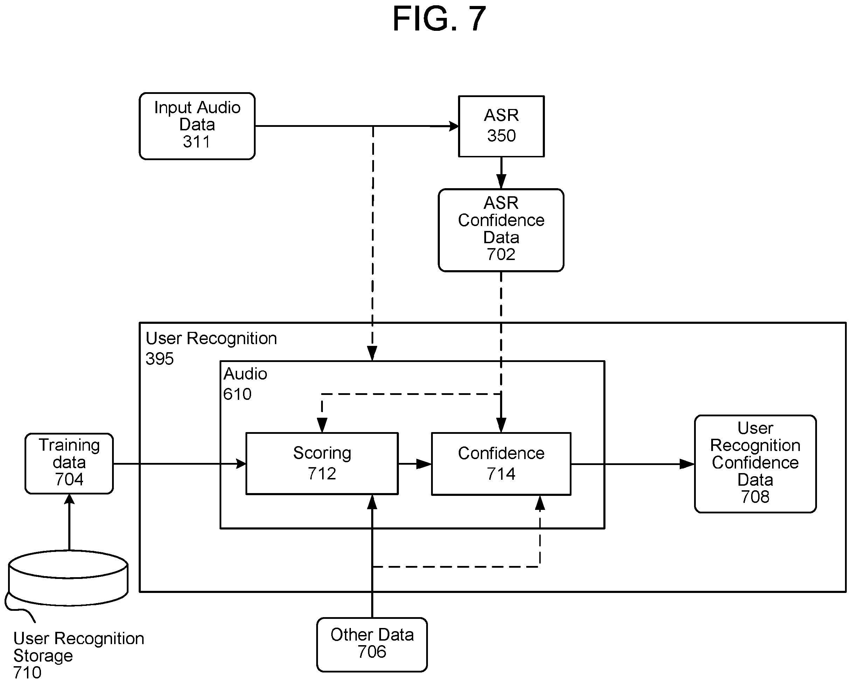

FIG. 7 illustrates the audio component 610 of the user recognition component 395 performing user recognition using audio data, for example the input audio data 311. In addition to outputting text data as described above, the ASR component 350 may also output ASR confidence data 702, which may be passed to the user recognition component 395. The audio component 610 performs user recognition using various data including the input audio data 311, training data 704 corresponding to sample audio data corresponding to known users, the ASR confidence data 702, and other data 706. The audio component 610 may output user recognition confidence data 708 that reflects a certain confidence that the input audio data 311 represents an utterance spoken by one or more particular users. The user recognition confidence data 708 may include an indicator of a verified user (such as a user ID corresponding to the speaker of the utterance) along with a confidence value, such as a numeric value or binned value as discussed below. The user recognition confidence data 708 may be used by various other components of the user recognition component 395 to recognize a user.

The training data 704 may be stored in a user recognition storage 710. The user recognition storage 710 may be included in the server(s) 120 or in communication with the server(s) 120, for example over the one or more networks 199. Further, the user recognition storage 710 may be part of the profile storage 370. The user recognition storage 710 may be a cloud-based storage.

The training data 704 stored in the user recognition storage 710 may be stored as waveforms and/or corresponding features / vectors. The training data 704 may correspond to data from various audio samples, each audio sample associated with a user ID of a known user. The audio samples may correspond to voice profile data for one or more users. For example, each user known to the system may be associated with some set of training data 704. Thus, the training data 704 may include a biometric representation of a user's voice. The audio component 610 may use the training data 704 to compare against input audio data 311 to determine the identity of a user that spoke the utterance represented in the input audio data 311. The training data 704 stored in the user recognition storage 710 may thus be associated with multiple users of the system. The training data 704 stored in the user recognition storage 710 may also be associated with the device 110 that captured the respective utterance.

To perform user recognition, the audio component 610 may determine the device 110 from which the input audio data 311 originated. For example, the input audio data 311 may be associated with a tag or other metadata indicating the device 110 (e.g., a device ID). Either the device 110 or the server(s) 120 may tag the input audio data 311 as such. The user recognition component 395 may send a signal to the user recognition storage 710, with the signal requesting only training data 704 associated with the device 110 (e.g., the device ID) from which the input audio data 311 originated. This may include determining user profile data including the device ID and then only inputting (to the audio component 610) training data 704 associated with user IDs corresponding to the user profile data. This limits the universe of possible training data 704 the audio component 610 should consider at runtime when recognizing a user and thus decreases the amount of time to perform user recognition by decreasing the amount of training data 704 needed to be processed. Alternatively, the user recognition component 395 may access all (or some other subset of) training data 704 available to the system.

If the audio component 610 receives training data 704 as an audio waveform, the audio component 610 may determine features / vectors of the waveform(s) or otherwise convert the waveform(s) into a data format (e.g., fingerprint) that can be used by the audio component 610 to actually perform user recognition. Likewise, if the audio component 610 receives the input audio data 311 as an audio waveform, the audio component 610 may determine features / vectors of the waveform(s) or otherwise convert the waveform(s) into a fingerprint unique to the input audio data 311. A fingerprint may be unique but irreversible such that a fingerprint is unique to underlying audio data but cannot be used to reproduce the underlying audio data. The audio component 610 may identify the user that spoke the utterance represented in the input audio data 311 by comparing features / vectors / fingerprint representing the input audio data 311 to training features / vectors / fingerprints (either received from the user recognition storage 710 or determined from training data 704) received from the user recognition storage 710.

The audio component 610 may include a scoring component 712 that determines respective scores indicating whether the utterance represented by the input audio data 311 was spoken by particular users (represented by the training data 704). The audio component 610 may also include a confidence component 714 that determines an overall confidence of the user recognition operations (such as those of the scoring component 712) and/or an individual confidence for each user potentially identified by the scoring component 712. The output from the scoring component 712 may include scores for all users with respect to which user recognition was performed (e.g., all user IDs associated with the device ID associated with the input audio data 311). For example, the output may include a first score for a first user ID, a second score for a second user ID, third score for a third user ID, etc. Although illustrated as two separate components, the scoring component 712 and confidence component 714 may be combined into a single component or may be separated into more than two components.

The scoring component 712 and confidence component 714 may implement one or more trained machine learning models (such neural networks, classifiers, etc.) as known in the art. For example, the scoring component 712 may use probabilistic linear discriminant analysis (PLDA) techniques. PLDA scoring determines how likely it is that an input audio data feature vector corresponds to a particular training data feature vector associated with a particular user ID. The PLDA scoring may generate similarity scores for each training feature vector considered and may output the list of scores and user IDs of the users whose training data feature vectors most closely correspond to the input audio data feature vector. The scoring component 712 may also use other techniques such as GMMs, generative Bayesian models, or the like to determine similarity scores.

The confidence component 714 may input various data including the ASR confidence data 702, audio length (e.g., number of frames of the input audio data 311), audio condition / quality data (such as signal-to-interference data or other metric data), fingerprint data, image data, or other data to consider how confident the audio component 610 is with regard to the scores linking user IDs to the input audio data 311. The confidence component 714 may also consider the similarity scores and user IDs output by the scoring component 712. Thus, the confidence component 714 may determine that a lower ASR confidence represented in the ASR confidence data 702, or poor input audio quality, or other factors, may result in a lower confidence of the audio component 610. Whereas a higher ASR confidence represented in the ASR confidence data 702, or better input audio quality, or other factors, may result in a higher confidence of the audio component 610. Precise determination of the confidence may depend on configuration and training of the confidence component 714 and the models used therein. The confidence component 714 may operate using a number of different machine learning models / techniques such as GMM, neural networks, etc. For example, the confidence component 714 may be a classifier configured to map a score output by the scoring component 712 to a confidence.

The audio component 610 may output user recognition confidence data 708 representing a single user ID, or multiple user IDs in the form of an N-best list. For example, the audio component 610 may output user recognition confidence data 708 representing each user ID associated with the device ID of the device 110 from which the input audio data 311 originated.

The user recognition confidence data 708 may include particular scores (e.g., 0.0 - 1.0, 0-1000, or whatever scale the system is configured to operate). Thus, the system may output an N-best list of user IDs with confidence scores (e.g., User ID 1 - 0.2, User ID 2 - 0.8). Alternatively or in addition, the user recognition confidence data 708 may include binned recognition indicators. For example, a computed recognition score of a first range (e.g., 0.0 - 0.33) may be output as "low," a computed recognition score of a second range (e.g., 0.34 - 0.66) may be output as "medium," and a computed recognition score of a third range (e.g., 0.67 - 1.0) may be output as "high." Thus, the system may output an N-best list of user IDs with binned scores (e.g., User ID 1 - low, User ID 2 - high). Combined binned and confidence score outputs are also possible. Rather than a list of user IDs and their respective scores and/or bins, the user recognition confidence data 708 may only include information related to the top scoring user ID as determined by the audio component 610. The scores and bins may be based on information determined by the confidence component 714. The audio component 610 may also output a confidence value that the scores / bins are correct, where the confidence value indicates how confident the audio component 610 is in the user recognition confidence data 708. This confidence value may be determined by the confidence component 714.

The confidence component 714 may determine differences between confidence scores of different user IDs when determining the user recognition confidence data 708. For example, if a difference between a first user ID confidence score and a second user ID confidence score is large, and the first user ID confidence score is above a threshold, then the audio component 610 is able to recognize the first user ID is associated with the input audio data 311 with a much higher confidence than if the difference between the user ID confidence scores were smaller.

The audio component 610 may perform certain thresholding to avoid incorrect user recognition confidence data 708 being output. For example, the audio component 610 may compare a confidence score output by the confidence component 714 to a confidence threshold. If the confidence score is not above the confidence threshold (for example, a confidence of "medium" or higher), the audio component 610 may not output user recognition confidence data 708, or may only include in that data 708 an indication that a user ID could not be determined. Further, the audio component 610 may not output user recognition confidence data 708 until a threshold amount of input audio data 311 is accumulated and processed. Thus, the audio component 610 may wait until a threshold amount of input audio data 311 has been processed before outputting user recognition confidence data 708. The amount of received input audio data 311 may also be considered by the confidence component 714.

The user recognition component 395 may combine data from components 608-618 to determine the identity of a particular user. As part of its audio-based user recognition operations, the audio component 610 may use other data 706 to inform user recognition processing. A trained model or other component of the audio component 610 may be trained to take other data 706 as an input feature when performing recognition. The other data 706 may include a wide variety of data types depending on system configuration and may be made available from other sensors, devices, or storage such as user profile data, etc. The other data 706 may include a time of day at which the input audio data 311 was captured, a day of a week in which the input audio data 311 was captured, the text data output by the ASR component 350, NLU results data 585, and/or other data.

In one example, the other data 706 may include image data or video data. For example, facial recognition may be performed on image data or video data associated with the received input audio data 311 (e.g., received contemporaneously with the input audio data 311). Facial recognition may be performed by the vision component 608, or by another component of the server(s) 120. The output of the facial recognition process may be used by the audio component 610. That is, facial recognition output data may be used in conjunction with the comparison of the features / vectors of the input audio data 311 and training data 704 to perform more accurate user recognition.

The other data 706 may also include location data of the device 110. The location data may be specific to a building within which the device 110 is located. For example, if the device 110 is located in user A's bedroom, such location may increase a user recognition confidence associated with user A's user ID, while decreasing a user recognition confidence associated with user B's user ID.

The other data 706 may also include data related to the profile of the device 110. For example, the other data 706 may further include type data indicating a type of the device 110. Different types of devices may include, for example, a smart watch, a smart phone, a tablet computer, and a vehicle. The type of device may be indicated in the profile associated with the device 110. For example, if the device 110 from which the input audio data 311 was received is a smart watch or vehicle belonging to user A, the fact that the device 110 belongs to user A may increase a user recognition confidence associated with user A's user ID, while decreasing a user recognition confidence associated with user B's user ID. Alternatively, if the device 110 from which the input audio data 311 was received is a public or semi-public device, the system may use information about the location of the device 110 to cross-check other potential user locating information (such as calendar data, etc.) to potentially narrow the potential user IDs with respect to which user recognition is to be performed.

The other data 706 may additionally include geographic coordinate data associated with the device 110. For example, profile data associated with a vehicle may indicate multiple user IDs. The vehicle may include a global positioning system (GPS) indicating latitude and longitude coordinates of the vehicle when the input audio data 311 is captured by the vehicle. As such, if the vehicle is located at a coordinate corresponding to a work location / building of user A, such may increase a user recognition confidence associated with user A's user ID, while decreasing a user recognition confidence of all other user IDs indicated in the profile data associated with the vehicle. Global coordinates and associated locations (e.g., work, home, etc.) may be indicated in user profile data associated with the device 110. The global coordinates and associated locations may be associated with respective user IDs in the user profile storage 370.

The other data 706 may also include other data / signals about activity of a particular user that may be useful in performing user recognition with respect to the input audio data 311. For example, if a user has recently entered a code to disable a home security alarm, and the utterance was received from a device 110 at the home, signals from the home security alarm about the disabling user, time of disabling, etc. may be reflected in the other data 706 and considered by the audio component 610. If a mobile device (such as a phone, Tile, dongle, or other device) known to be associated with a particular user is detected proximate to (for example physically close to, connected to the same WiFi network as, or otherwise nearby) the device 110, this may be reflected in the other data 706 and considered by the audio component 610.

The user recognition confidence data 708 output by the audio component 610 may be used by other components of the user recognition component 395 and/or may be sent to one or more speechlets 390, the orchestrator 330, or to other components of the system.

As described, the server(s) 120 may perform NLU processing to generate NLU results data 585 as well as perform user recognition processing to generate user recognition data 695. User recognition processing may be performed in parallel (or at least partially in parallel) with NLU processing. Both the NLU results data 585 and the user recognition data 695 may be sent to the orchestrator component 330 by the NLU component 360 and the user recognition component 395, respectively. By performing user recognition processing at least partially in parallel with NLU processing, a time between the orchestrator component 330 receiving the user recognition data 695 and the orchestrator component 330 receiving the NLU results data 585 may be minimized, which may decrease orchestrator processing latency in a robust system that receives a multitude of user inputs at any given moment.

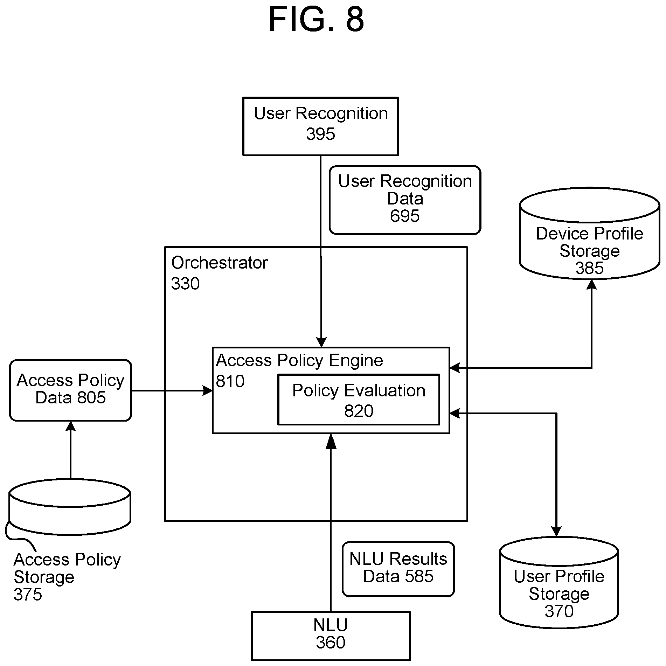

In particular, the user recognition data 695 and the NLU results data 585 may be sent to an access policy engine 810 of the orchestrator component 330 (illustrated in FIG. 8). The access policy engine 810 may act as a gatekeeper in that the access policy engine 810 may prevent the processing of data representing user input by a speechlet 390 when the data representing the input is deemed inappropriate for an age (or age range) of the user.

By implementing the access policy engine 810 post-NLU processing, the NLU component 360 is capable of processing without influence from an identity and age of the user. This ultimately enables the NLU component 360 to determine the most accurate intent of the user, regardless of whether the intent is deemed inappropriate for the user. As a result, the system may process a user input to determine an accurate representative intent of the input and simply implement policies that prevent fulfillment of the user input by a speechlet 390 in appropriate circumstances.

As illustrated in FIG. 8, the access policy engine 810 receives user recognition data 695 from the user recognition component 395 and NLU results data 585, including intent data, from the NLU component 360. If the NLU results data 585 includes an N-best list of NLU results data associated with various speechlets 390, the access policy engine 810 (or another component of the orchestrator component 330) may identify the top scoring entry in the NLU results data, with the top scoring entry including intent data representing an intent determined most representative of the user input.

User recognition processing may determine an age range to which the present user belongs. The age range may be represented in the user recognition data 695. Illustrative age ranges include 0-3 years, 4-6 years, 7-10 years, and the like. Illustrative age ranges may also include child, preteen, teenager, and the like. Age range data may be represented in device profile data associated with a respective device ID. The user recognition component 395 may implement one or more machine learned models to determine an age range of a present user.

The model(s) of the user recognition component 395 may be trained and operated according to various machine learning techniques. Such techniques may include, for example, neural networks (such as deep neural networks and/or recurrent neural networks), inference engines, trained classifiers, etc. Examples of trained classifiers include Support Vector Machines (SVMs), neural networks, decision trees, AdaBoost (short for "Adaptive Boosting") combined with decision trees, and random forests. Focusing on SVM as an example, SVM is a supervised learning model with associated learning algorithms that analyze data and recognize patterns in the data, and which are commonly used for classification and regression analysis. Given a set of training examples, each marked as belonging to one of two categories (e.g., spam activity or not spam activity), an SVM training algorithm builds a model that assigns new examples into one category or the other, making it a non-probabilistic binary linear classifier. More complex SVM models may be built with the training set identifying more than two categories, with the SVM determining which category is most similar to input data. An SVM model may be mapped so that the examples of the separate categories are divided by clear gaps. New examples are then mapped into that same space and predicted to belong to a category based on which side of the gaps they fall on. Classifiers may issue a "score" indicating which category the data most closely matches. The score may provide an indication of how closely the data matches the category. In an example, the one or more machine learned models implemented by the user recognition component 395 may be trained with positive examples of speech received from users of known ages.

In order to apply machine learning techniques, machine learning processes themselves need to be trained. Training a machine learning component, such as the user recognition component 395, requires establishing a "ground truth" for training examples. In machine learning, the term "ground truth" refers to the accuracy of a training set's classification for supervised learning techniques. Various techniques may be used to train the models including backpropagation, statistical learning, supervised learning, semi-supervised learning, stochastic learning, or other known techniques.

Alternatively or in addition, the user recognition data 695 may include one or more user IDs corresponding to users that likely originated the current user input. The access policy engine 810 may determine the top scoring user ID (or the user ID if only one user ID is represented in the user recognition data 695). The access policy engine 810 may then determine user profile data associated with the determined user ID in the user profile storage 370. Specifically, the access policy engine 810 may determine age information (e.g., a specific age or age range) represented in the user profile data associated with the user ID.

The access policy engine 810 may identify access policy data 805, stored in the access policy storage 375, associated with the age range or age represented in the user recognition data 695 or user profile data. The access policy engine 810, or more particularly a policy evaluation component 820 of the access policy engine 810, may then determine whether a speechlet 390 should be able to execute with respect to the NLU results data 585 or whether the NLU results data 585 should not be sent to the speechlet 390 due to the user input being inappropriate for the user's age range or age. Specifically, the policy evaluation component 820 may determine whether the intent data, represented in the NLU results data 585, is represented in the access policy data 805 associated with the age range or age.

As described, the user recognition data 695 may represent a user ID or N-best list of user IDs. The access policy engine 810 may identify access policy data 805, stored in the access policy storage 375, associated with the user ID (or top scoring user ID in the case of an N-best list). The policy evaluation component 820 may then determine whether the intent data, represented in the NLU results data 585, is represented in the access policy data 805.

As described above, the access policy engine 810 may determine access policy data 805 associated with an age, age range, or user ID represented in the user recognition data 695 or user profile data. Certain systems may not be configured with user recognition processing functionality. Alternatively or in addition, certain systems may be configured with child devices. In such systems, the access policy engine 810 receives data representing a device ID associated with the device 110 that sent user input data (e.g., the input audio data 311 or the input text data 313) to the server(s) 120. The access policy engine 810 may identify access policy data 805, stored in the access policy storage 375, associated with the device ID. The policy evaluation component 820 may then determine whether the intent data, represented in the NLU results data 585, is represented in the access policy data 805.

A device 110 may be associated with a user of a particular age or age range. After receiving the device ID, the access policy engine 810 may determine device profile data associated with the device ID in the device profile storage 385. In particular, the access policy engine 810 may determine age information (e.g., a specific age or age range) represented in the device profile data associated with the device ID. The access policy engine 810 may then identify access policy data 805, stored in the access policy storage 375, associated with the age range or age represented in the device profile data. The policy evaluation component 820 may then determine whether the intent data, represented in the NLU results data 585, is represented in the access policy data 805.

As described above, the policy evaluation component 820 may determine whether an intent, represented in NLU results data 585, is considered appropriate for the present user. A single speechlet 390 may be associated with various intents. Therefore, a speechlet 390 may be able to execute for a specific user ID for certain intent data but not others. For example, it may be appropriate for a single speechlet 390 to execute with respect to first intent data associated with a user ID but not second intent data.

The policy evaluation component 820 may alternatively determine whether a speechlet 390, rather than the speechlet's individual intents, is considered appropriate for a present user. For example, rather than the policy evaluation component 820 determining whether intent data is represented in the access policy data 805, the policy evaluation component 820 may determine whether data representing a speechlet 390, included in the NLU results data 585 (or a top scoring entry thereof), is represented in the access policy data 805.

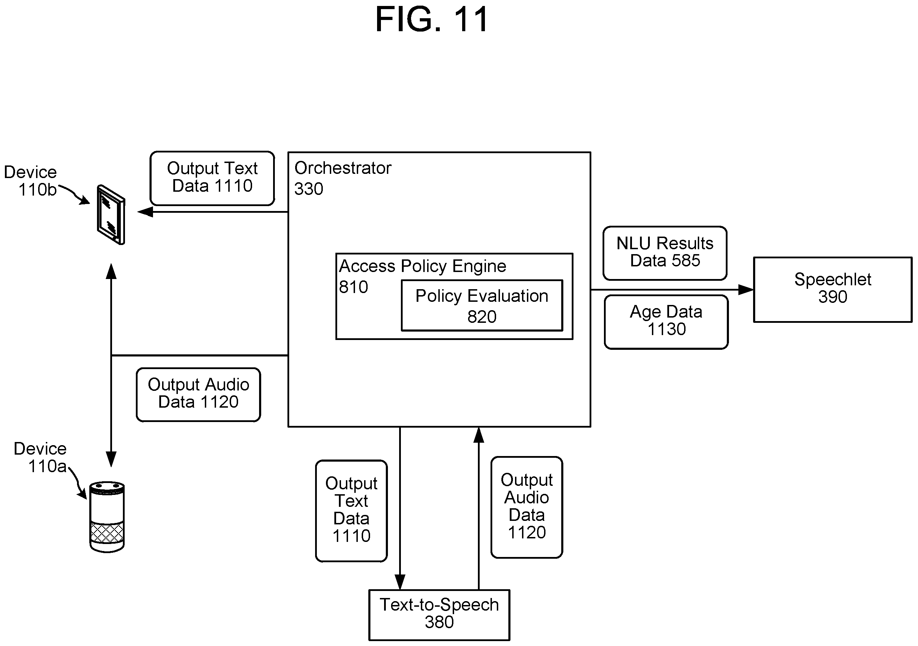

The orchestrator component 330 may perform various operations in response to the policy evaluation component's processing (as illustrated in FIG. 11). The below discussion with respect to FIG. 11 refers to the policy evaluation component 820 determining whether intent data is represented in access policy data 805. One skilled in the art will appreciate that the orchestrator component 330 may perform similar operations when the policy evaluation component 820 determines whether data representing a speechlet 390 is represented in access policy data 805, as described above.

If the policy evaluation component 820 determines the intent data is represented in the access policy data 805, representing the derived intent of the user input is inappropriate for the present user, the orchestrator component 330 may cause output text data 1110 to be sent to a device 110, represented in user profile data of the present user (e.g., the device 110b), including a display. The prompt may be intent agnostic (e.g., the output text data 1110 may correspond to "I cannot process your command"). The prompt may alternatively be specific to one or more intents. For example, for a <Purchase> intent, the output text data 1110 may correspond to "I noticed you are trying to buy something. Please have an adult help you make your purchase."

The output text data 1110 may alternatively attempt to divert the user to an intent appropriate for the user's age. For example, if the NLU results data 585 represents <BuyBook> intent data and such intent data is represented in access policy data 805, the orchestrator component 330 (or a component thereof) may generate output text data 1110 corresponding to "I noticed you are trying to buy a book, would you like to listen to an audio book instead," where the latter portion of the output text data 1110 corresponds to a child appropriate <PlayAudioBook> intent. The suggested intent should be similar or otherwise relevant to the requested intent, but child appropriate

In addition or alternatively to causing a device 110 to display output text, the orchestrator component 330 may cause a device 110, associated with user profile data of the present user, to present output audio corresponding to the pre-configured prompt. The orchestrator component 330 may send the output text data 1110 to the TTS component 380, which generates output audio data 1120 corresponding to the output text data 1110 and sends the output audio data 1120 to the orchestrator component 330. The orchestrator component 330 may send the output audio data 1120 to a device(s) including a speaker(s) (e.g., the device 110a and/or the device 110b).

Alternatively, if the top scoring intent data in the NLU results data 585 is determined to be inappropriate for the present user (as determined by the policy evaluation component 820), the access policy engine 810 may work its way down the N-best list of NLU results data 585 until the policy evaluation component 820 determines appropriate intent data. If the determined child appropriate intent data is not associated with an NLU confidence score satisfying a threshold NLU confidence score, the orchestrator component 330 may cause the output text data 1110 and/or the output audio data 1120 to be presented to the user. Alternatively, if the determined child appropriate intent data is associated with an NLU confidence score satisfying a threshold NLU confidence score, the orchestrator component 330 may send data to a speechlet 390 as described below. The threshold NLU confidence score may be configured relatively high to ensure the intent data, while not being the top scoring intent, nonetheless adequately represents the intent of the user.

Alternatively, if the policy evaluation component 820 determines the intent data is represented in the access policy data 805, representing the derived intent of the user input is inappropriate for the present user, the orchestrator component 330 may invoke a speechlet that is configured to generate output data (e.g., output text data and/or output audio data) that represents adult permission is needed for the system to further process the user input to determine an ultimate action or content. The speechlet may cause a device 110 to output audio and/or present text corresponding to the generated output data. The device 110 may then receive audio corresponding to an utterance and send audio data corresponding thereto to the server(s) 120. The user recognition component 395 may determine an adult user (associated with the child user that originated child inappropriate input) spoke the utterance. The ASR component 350 may convert the audio data into text data and the NLU component 360 may determine the utterance corresponds to in indication that it is ok to process the child-inappropriate input for the child user. In response to the foregoing user recognition component 395 and NLU component 360 determinations, the orchestrator 330 may send the NLU results data 585 (or a portion of the NLU results data 585 associated with the top scoring intent data) to the speechlet 390 associated with the NLU results data 585 (or portion thereof).

Alternatively, if the policy evaluation component 820 determines the intent data is represented in the access policy data 805, representing the derived intent of the user input is inappropriate for the present user, the orchestrator component 330 may determine adult configured devices associated with the presently invoked device. For example, the orchestrator component 330 may determine profile data including the presently invoked device and determine adult configured devices included in the same profile data. The orchestrator component 330 may also determine which of the adult configured devices as associated with presence indicators. The system may associate a particular device with a presence indicator based on, for example, the device receiving user input within a past threshold amount of time (e.g., within the past 2 minutes), the device being a car that is currently being driven. To ensure the presence indicator is associated with an adult user, the system may determine an identity of the user (for example using user recognition processing) and associate the user's ID with the presence indicator. The orchestrator 330 may then cause all of the devices associated with adult users and presence indicators, as well as certain adult devices that may not be associated with presence indicators (e.g., smart phones, tablets, etc.) to output notifications requesting input regarding whether it is ok for the system to processing the intent data represented in the access policy data 805. If an adult user indicates the system can processing the intent data, the system may then perform such approved processing.

If the policy evaluation component 820 determines the intent data is not represented in the access policy data 805, representing the intent data is appropriate for the present user's age range or age, the orchestrator component 330 may send the NLU results data 585 (or a portion of the NLU results data 585 associated with the top scoring intent data) to the speechlet 390 associated with the NLU results data 585 (or portion thereof).

The orchestrator component 330 may also send additional data, such as data 1130 representing the user's age range or age, to the speechlet 390. The speechlet 390 may use such data 1130 to perform additional filtering of content based on the user's age, etc. that the orchestrator 330 is incapable of performing. For example, if the user requests music be played, the speechlet 390 may provide music appropriate for the user's age; if the user requests an answer to a question, the speechlet 390 may provide a user age appropriate response; if the user requests a story be audibly output, the speechlet 390 may provide user age appropriate book content; etc. While the policy evaluation component 820 may determine the intent data is appropriate for the user's age or age range (e.g., based on the intent data not be represented in the access policy data 805), the policy evaluation component 820 may not be properly suited to filter output content associated with the intent data, whereas a speechlet 390 may be so suited.

For example, user input may correspond to "play me Jay-Z music." The NLU component 360 may determine such input corresponds to a <PlayMusic> intent. The policy evaluation component 820 may determine <PlayMusic> intent data is not represented in access policy data 805 and therefore instruct the orchestrator component 330 to send NLU results data 585 to a music speechlet. The orchestrator component 330 may also send the music speechlet data 1130 representing the user's age or age range. The music speechlet may determine audio data corresponding to songs associated with an artist corresponding to "Jay-Z." By receiving the data 1130 representing the user's age or age range, the music speechlet may filter the identified song audio data to only those not including profanity. Such filtering of the music audio data may not be possible by the policy evaluation component 820 and may not be possible without the orchestrator 330 providing the speechlet 390 with data representing the user's age or age range.

Access policies in the access policy storage 375 may be temporal-based policies that are only applicable at certain times. For example, such an access policy may indicate a <PlayMusic> intent is unauthorized at some time when an adult thinks a child should be doing their homework. For further example, such an access policy may indicate input associated with a certain device ID should not be processed at night when a child should be sleeping. Temporal information may be included in the access policy data 805 sent to the access policy engine and may be used by the policy evaluation component 820 when determining whether a current user input is authorized.

The additional data (which may be included as part of the data 1130) the orchestrator component 330 may send to the speechlet 390 may also include directives. Illustrative directives may include: do not provide content including profanity; turn on explicit language filtering; do not perform a sales transaction; turn off purchasing; do not provide political content; etc. To ensure the additional data includes directives that may be operated on by a speechlet 390, a developer of the speechlet 390 (or developer of a corresponding skill) may provide the system with potential directives the speechlet 390 can execute with respect to. The orchestrator component 330 may consider directives received from a speechlet/skill developer when determining which directives to send to the speechlet 390. The directives may be appended to access policies stored in the access policy storage 375.

There may be situations where the speechlet 390 determines it cannot provide content appropriate for the present user based on the NLU results data 585 and the data representing the user's age or age range. For example, if the user input corresponds to "play me Jay-Z music" and the user is 5 years old, the speechlet 390 may determine it cannot provide any user appropriate music (e.g., cannot provide any audio data corresponding to songs that do not include profanity). In such a situation, the speechlet 390 may provide the orchestrator component 330 with an indication of such determination and the orchestrator component 330 may cause the pre-generated output text data 1110 and/or corresponding output audio data 1120 to be presented to the user.

In other implementations, the orchestrator component 330 (or a component thereof) may be configured to access gazetteers 484, etc. and determine whether intent / slot combinations are appropriate for the present user ID and/or device ID. For example, the orchestrator component 330 may be configured to determine an intent of <PlayMusic> with a NLU resolved slot of "Adele" is appropriate for a specific user ID or device ID while an intent of <PlayMusic> with a NLU resolved slot of "Jay-Z" is inappropriate for the user ID or device ID.

By implementing the access policy engine 810 and the policy evaluation component 820 on the intent level or speechlet level, the breadth of data to be processed by the access policy engine 810 or the policy evaluation component 820 is limited as compared to if the access policy engine and the policy evaluation component 820 were implemented on the user input level pre-NLU processing. This is because the system is configured with a finite number of intents and speechlets 390 whereas user input may be provided in an infinite number of variations.

Nonetheless, it may be beneficial to implement the access policy engine 810 and the policy evaluation component 820 on the user input level pre-NLU processing. Such may be beneficial to identify when a child user input includes words (e.g., rude words or profanity) deemed inappropriate for the user's age or age range. The access policy engine 810 may receive ASR results data, if the user input originates as input audio data 311, or the input text data 313. The access policy engine 810 may determine access policy data 805 associated with a user ID, device ID, age, or age range of the user as described above. The access policy data 805 may include text data corresponding to inappropriate words. The policy evaluation component 820 may determine whether words in the ASR results data or the input text data 313 are represented in the access policy data 805. If words in the ASR results data or the input text data 313 are represented in the access policy data 805, the orchestrator component 330 may output a pre-generated response as described above. If words in the ASR results data or the input text data 313 are not represented in the access policy data 805, the NLU component 360 may process with respect to the ASR results data or the input text data 313 and the access policy engine 810 and policy evaluation component 820 may operate with respect to the NLU results data 585 as described above.

As described, the access policy engine 810 and the policy evaluation component 820 may operate on the user input level pre-NLU processing. That is, the access policy engine 810 and the policy evaluation component 820 may operate on the user input level with respect to every user input received by the server(s) 120. Alternatively, the access policy engine 810 and the policy evaluation component 820 may operate on the user input level post-NLU processing. More specifically, the access policy engine 810 and the policy evaluation component 820 may operate on the user input level with respect to only NLU results data 585 associated with specific speechlets (e.g., information providing speechlets). By limiting such processing to only information providing (and other similar) speechlets (e.g., which a user may invoke using nearly unlimited variations of input), the access policy engine 810 and the policy evaluation component 820 may be prevented from operating on the user input level with respect to user inputs invoking speechlets that require more formalistic inputs, such as ride sharing speechlets, music speechlets, and the like, as such formalistic inputs are unlikely to include rude or profane content.

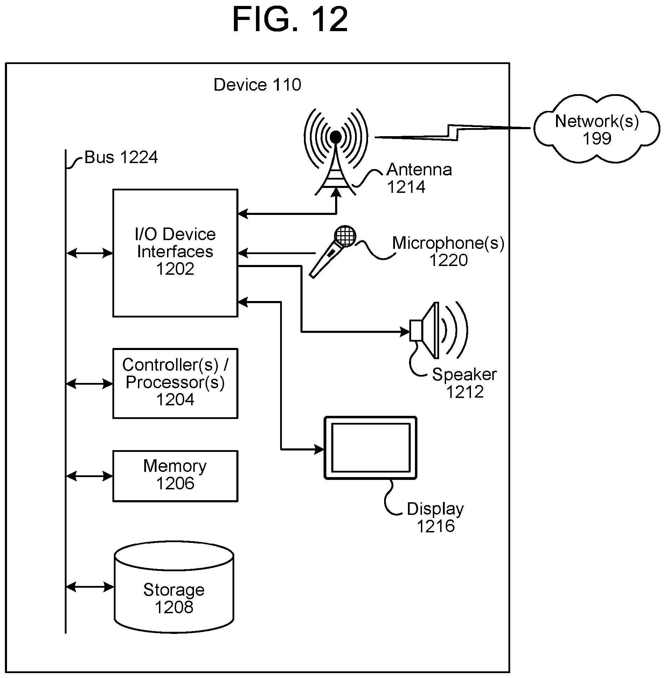

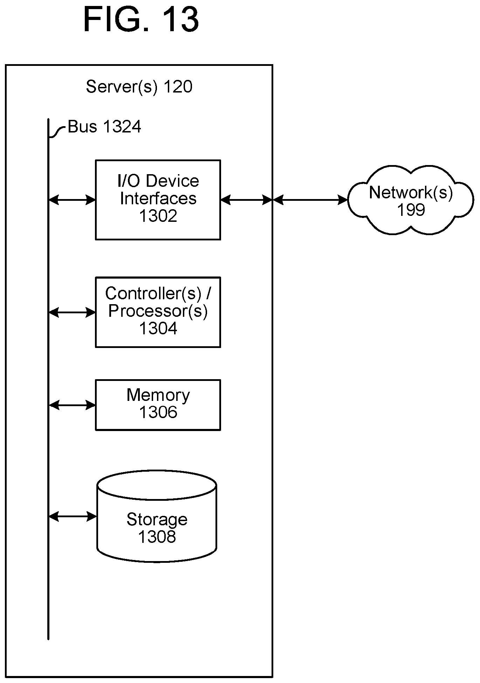

FIG. 12 is a block diagram conceptually illustrating a device 110 that may be used with the system. FIG. 13 is a block diagram conceptually illustrating example components of a remote device, such as the server(s) 120, which may assist with ASR processing, NLU processing, etc. Multiple servers 120 may be included in the system, such as one or more servers 120 for performing ASR processing, one or more servers 120 for performing NLU processing, etc. In operation, each of these devices (or groups of devices) may include computer-readable and computer-executable instructions that reside on the respective device (110/120), as will be discussed further below.

Each of these devices (110/120) may include one or more controllers/processors (1204/1304), which may each include a central processing unit (CPU) for processing data and computer-readable instructions, and a memory (1206/1306) for storing data and instructions of the respective device. The memories (1206/1306) may individually include volatile random access memory (RAM), non-volatile read only memory (ROM), non-volatile magnetoresistive memory (MRAM), and/or other types of memory. Each device (110/120) may also include a data storage component (1208/1308) for storing data and controller/processor-executable instructions. Each data storage component (1208/1308) may individually include one or more non-volatile storage types such as magnetic storage, optical storage, solid-state storage, etc. Each device (110/120) may also be connected to removable or external non-volatile memory and/or storage (such as a removable memory card, memory key drive, networked storage, etc.) through respective input/output device interfaces (1202/1302).

Computer instructions for operating each device (110/120) and its various components may be executed by the respective device's controller(s)/processor(s) (1204/1304), using the memory (1206/1306) as temporary "working" storage at runtime. A device's computer instructions may be stored in a non-transitory manner in non-volatile memory (1206/1306), storage (1208/1308), or an external device(s). Alternatively, some or all of the executable instructions may be embedded in hardware or firmware on the respective device in addition to or instead of software.

Each device (110/120) includes input/output device interfaces (1202/1302). A variety of components may be connected through the input/output device interfaces (1202/1302), as will be discussed further below. Additionally, each device (110/120) may include an address/data bus (1224/1324) for conveying data among components of the respective device. Each component within a device (110/120) may also be directly connected to other components in addition to (or instead of) being connected to other components across the bus (1224/1324).

Referring to FIG. 12, the device 110 may include input/output device interfaces 1202 that connect to a variety of components such as an audio output component such as a speaker 1212, a wired headset or a wireless headset (not illustrated), or other component capable of outputting audio. The device 110 may also include an audio capture component. The audio capture component may be, for example, a microphone 1220 or array of microphones, a wired headset or a wireless headset (not illustrated), etc. If an array of microphones is included, approximate distance to a sound's point of origin may be determined by acoustic localization based on time and amplitude differences between sounds captured by different microphones of the array. The device 110 may additionally include a display 1216 for displaying content.

Via antenna(s) 1214, the input/output device interfaces 1202 may connect to one or more networks 199 via a wireless local area network (WLAN) (such as WiFi) radio, Bluetooth, and/or wireless network radio, such as a radio capable of communication with a wireless communication network such as a Long Term Evolution (LTE) network, WiMAX network, 3G network, 4G network, 5G network, etc. A wired connection such as Ethernet may also be supported. Through the network(s) 199, the system may be distributed across a networked environment. The I/O device interface (1202/1302) may also include communication components that allow data to be exchanged between devices such as different physical servers in a collection of servers or other components.

The components of the device(s) 110 and the server(s) 120 may include their own dedicated processors, memory, and/or storage. Alternatively, one or more of the components of the device(s) 110 and the server(s) 120 may utilize the I/O interfaces (1202/1302), processor(s) (1204/1304), memory (1206/1306), and/or storage (1208/1308) of the device(s) 110 and server(s) 120, respectively. Thus, the ASR component 350 may have its own I/O interface(s), processor(s), memory, and/or storage; the NLU component 360 may have its own I/O interface(s), processor(s), memory, and/or storage; and so forth for the various components discussed herein.

As noted above, multiple devices may be employed in a single system. In such a multi-device system, each of the devices may include different components for performing different aspects of the system's processing. The multiple devices may include overlapping components. The components of the device 110 and the server(s) 120, as described herein, are illustrative, and may be located as a stand-alone device or may be included, in whole or in part, as a component of a larger device or system.

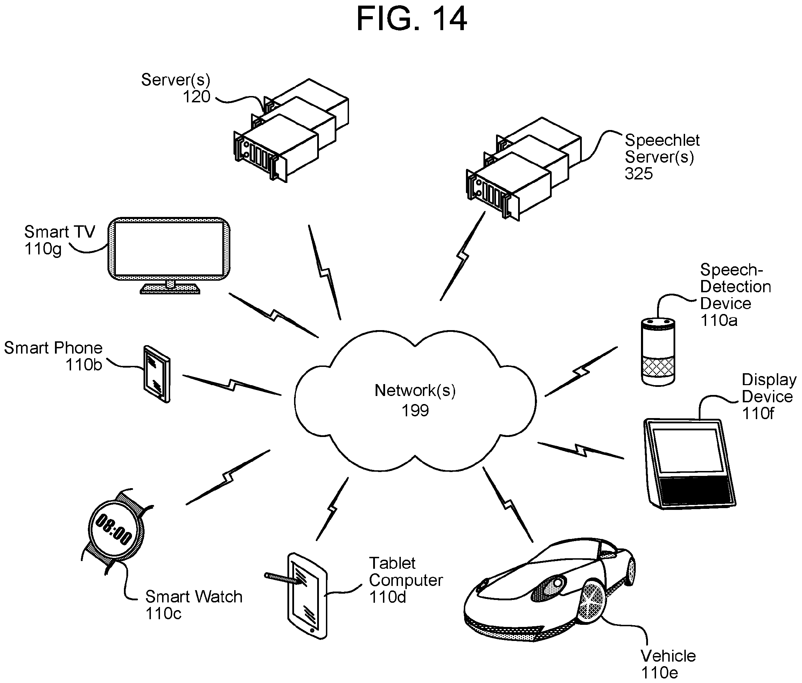

As illustrated in FIG. 14, multiple devices (110a-110g, 120, 325) may contain components of the system and the devices may be connected over a network(s) 199. The network(s) 199 may include a local or private network or may include a wide network such as the Internet. Devices may be connected to the network(s) 199 through either wired or wireless connections. For example, a speech-detection device 110a, a smart phone 110b, a smart watch 110c, a tablet computer 110d, a vehicle 110e, a display device 110f, and/or a smart television 110g may be connected to the network(s) 199 through a wireless service provider, over a WiFi or cellular network connection, or the like. Other devices are included as network-connected support devices, such as the server(s) 120, the speechlet server(s) 325, and/or others. The support devices may connect to the network(s) 199 through a wired connection or wireless connection. Networked devices may capture audio using one-or-more built-in or connected microphones or other audio capture devices, with processing performed by ASR components, NLU components, or other components of the same device or another device connected via the network(s) 199, such as the ASR component 350, the NLU component 360, etc. of one or more servers 120.

The concepts disclosed herein may be applied within a number of different devices and computer systems, including, for example, general-purpose computing systems, speech processing systems, and distributed computing environments.

The above aspects of the present disclosure are meant to be illustrative. They were chosen to explain the principles and application of the disclosure and are not intended to be exhaustive or to limit the disclosure. Many modifications and variations of the disclosed aspects may be apparent to those of skill in the art. Persons having ordinary skill in the field of computers and speech processing should recognize that components and process steps described herein may be interchangeable with other components or steps, or combinations of components or steps, and still achieve the benefits and advantages of the present disclosure. Moreover, it should be apparent to one skilled in the art, that the disclosure may be practiced without some or all of the specific details and steps disclosed herein.

Aspects of the disclosed system may be implemented as a computer method or as an article of manufacture such as a memory device or non-transitory computer readable storage medium. The computer readable storage medium may be readable by a computer and may comprise instructions for causing a computer or other device to perform processes described in the present disclosure. The computer readable storage medium may be implemented by a volatile computer memory, non-volatile computer memory, hard drive, solid-state memory, flash drive, removable disk, and/or other media. In addition, components of system may be implemented as in firmware or hardware, such as an acoustic front end (AFE), which comprises, among other things, analog and/or digital filters (e.g., filters configured as firmware to a digital signal processor (DSP)).

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements, and/or steps are in any way required for one or more embodiments or that one or more embodiments necessarily include logic for deciding, with or without other input or prompting, whether these features, elements, and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Disjunctive language such as the phrase "at least one of X, Y, Z," unless specifically stated otherwise, is understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

As used in this disclosure, the term "a" or "one" may include one or more items unless specifically stated otherwise. Further, the phrase "based on" is intended to mean "based at least in part on" unless specifically stated otherwise.

## Claims

1. A system, comprising:
at least one processor; and
at least one memory comprising instructions that, when executed by the at least one processor, cause the system to:
receive, from a first device, first data representing first user input in natural language;
receive second data associated with a first identifier (ID) associated with the first user input;
determine first intent data representing a meaning of the natural language of the first user input;
identify first access policy data based at least in part on the first ID in an access policy storage component;
determine that the first access policy data represents that the first intent data is unauthorized for the first ID; and
after determining that the first access policy data represents that the first intent data is unauthorized for the first ID, cause the first device to output first content representing that the first user input is restricted from being further processed;
receive, from the first device, third data representing a second user input;
receive fourth data associated with the first ID;
determine second intent data representing the second user input, the second intent data being associated with a first confidence score;
determine third intent data representing the second user input, the third intent data being associated with a second confidence score, the second confidence score being less than the first confidence score;
based at least in part on the first confidence score being greater than the second confidence score, determine that the first access policy data represents that the second intent data is unauthorized for the first ID;
after determining that the first access policy data represents that the second intent data is unauthorized for the first ID, determine that the second confidence score satisfies a confidence score threshold; and
after determining that the second confidence score satisfies the confidence score threshold, determine that the first access policy data represents that the third intent data is authorized for the first ID.

2. The system of claim 1, wherein the at least one memory further comprises instructions that, when executed by the at least one processor, further cause the system to:
receive, from the first device, fifth data representing third user input;
receive sixth data associated with the first ID;
determine fourth intent data representing the third user input;
determine that the first access policy data represents that the fourth intent data is authorized for the first ID; and
after determining that the first access policy data represents that the fourth intent data is authorized for the first ID, execute with respect to the fourth intent data.

3. The system of claim 1 or 2, wherein the at least one memory further comprises instructions that, when executed by the at least one processor, further cause the system to:
receive, from the first device, fifth data corresponding to a third user input;
determine that the third user input corresponds to an indication to send the first intent data to a first speechlet associated with the first intent data and configured to perform one or more actions;
determine characteristics representing the third user input;
determine that the characteristics correspond to stored characteristics associated with a user ID;
determine that the user ID corresponds to an adult user; and
based on the indication and the user ID corresponding to an adult user, send the first intent data to the first speechlet to execute a first intent.

4. The system of claim 1, 2 or 3, wherein the at least one memory further comprises instructions that, when executed by the at least one processor, further cause the system to:
receive, from a second device, fifth data representing a third user input;
determine fourth intent data representing the third user input;
determine characteristics representing the fifth data;
determine that the characteristics correspond to stored characteristics associated with a user ID;
identify second access policy data associated with the user ID in the access policy storage component;
determine that the second access policy data represents that the fourth intent data is unauthorized for the user ID; and
after determining that the second access policy data represents that
the fourth intent data is unauthorized for the user ID, cause the second device to output second content representing that the third user input is restricted from being further processed.

5. The system of claim 1, 2, 3 or 4, wherein the at least one memory further comprises instructions that, when executed by the at least one processor, further cause the system to:
receive, from the first device, fifth data representing a third user input;
receive sixth data associated with the first ID;
determine a speechlet component associated with the third user input and configured to perform one or more actions;
determine fourth intent data representing the third user input;
determine that the first access policy data represents that the speechlet component is authorized to process with respect to user input received from the first device; and
after determining that second access policy data represents that the speechlet component is unauthorized to process with respect to user input received from the first device, send the fourth intent data to the speechlet component to execute a second intent.

6. The system of claim 1, 2, 3, 4 or 5, wherein the at least one memory further comprises instructions that, when executed by the at least one processor, further cause the system to:
receive, from a second device, fifth data representing a third user input;
determine characteristics representing the fifth data;
determine that the characteristics correspond to stored characteristics associated with a first user ID;
determine that the first user ID is an adult user ID,
determine that the adult user ID is associated with a second user ID;
determine that the second user ID is a child user ID:
determine that the fifth data indicates an intent; and
generate second access policy data representing that the intent is unauthorized for the second user ID.

7. The system of claim 1, 2, 3, 4, 5 or 6, wherein the at least one memory further comprises instructions that, when executed by the at least one processor, further cause the system to:
receive, from a second device, fifth data representing a third user input;
determine fourth intent data representing the third user input;
determine characteristics representing the fifth data;
determine that the characteristics correspond to stored characteristics associated with a user age range;
identify second access policy data associated with the user age range in the access policy storage component;
determine that the second access policy data represents that the fourth intent data is authorized for the user age range; and
after determining that the second access policy data represents that the fourth intent data is authorized for the user age range, execute with respect to the fourth intent data.

8. The system of claim 1, 2, 3, 4, 5, 6 or 7, wherein the at least one memory further comprises instructions that, when executed by the at least one processor, further cause the system to:
receive, from the first device, fifth data representing a third user input;
receive sixth data associated with the first ID;
determine fourth intent data representing the second user input;
determine that the first access policy data represents that the fourth intent data is unauthorized for the first ID;
after determining that the first access policy data represents that the fourth intent data is unauthorized for the first ID, determine fifth intent data associated with the fourth intent data;
determine that the first access policy data represents that the fifth intent data is authorized for the first ID;
generate seventh data representing the fifth intent data; and
cause the first device to output second content corresponding to the seventh data.

9. The system of claim 1, 2, 3, 4, 5, 6, 7 or 8, wherein the at least one memory further comprises instructions that, when executed by the at least one processor, further cause the system to:
receive, from a second device, fifth data representing a third user input;
determine fourth intent data representing the third user input;
determine characteristics representing the fifth data;
determine that the characteristics correspond to stored characteristics associated with a user ID;
determine, in user profile data associated with the user ID, sixth data representing an age of a user; and
send to a speechlet component associated with the third user input and configured to perform one or more actions:
the fourth intent data, and
seventh data representing the age.

10. A method, comprising:
receiving, from a first device, first data representing first user input in natural language;
receiving second data associated with a first identifier (ID) associated with the first user input;
determining first intent data representing a meaning of the natural language of the first user input;
identifying first access policy data based at least in part on the first ID in an access policy storage component;
determining that the first access policy data represents that the first intent data is unauthorized for the first ID; and
after determining that the first access policy data represents that the first intent data is unauthorized for the first ID, causing the first device to output first content representing that the first user input is restricted from being further processed;
receiving, from the first device, third data representing a second user input;
receiving fourth data associated with the first ID;
determining second intent data representing the second user input, the second intent data being associated with a first confidence score;
determining third intent data representing the second user input, the third intent data being associated with a second confidence score, the second confidence score being less than the first confidence score;
based at least in part on the first confidence score being greater than the second confidence score, determining that the first access policy data represents that the second intent data is unauthorized for the first ID;
after determining that the first access policy data represents that the second intent data is unauthorized for the first ID, determining that the second confidence score satisfies a confidence score threshold; and
after determining that the second confidence score satisfies the confidence score threshold, determining that the first access policy data represents that the third intent data is authorized for the first ID.

11. The method of claim 10, further comprising:
receiving, from the first device, fifth data representing third user input;
receiving sixth data associated with the first ID;
determining fourth intent data representing the third user input;
determining that the first access policy data represents that the fourth intent data is authorized for the first ID; and
after determining that the first access policy data represents that the fourth intent data is authorized for the first ID, executing with respect to the fourth intent data.

12. The method of claim 10 or 11, further comprising:
receiving, from the first device, fifth data corresponding to a third user input;
determining that the third user input corresponds to an indication to send the first intent data to a first speechlet associated with the first intent data and configured to perform one or more actions;
determining characteristics representing the third user input;
determining that the characteristics correspond to stored characteristics associated with a user ID;
determining that the user ID corresponds to an adult user; and
based on the indication and the user ID corresponding to an adult user, sending the first intent data to the first speechlet to execute a first intent.

13. The method of claim 10, 11, or 12, further comprising:
receiving, from a second device, fifth data representing a third user input;
determining fourth intent data representing the third user input;
determining characteristics representing the fifth data;
determining that the characteristics correspond to stored characteristics associated with a user ID;
identifying second access policy data associated with the user ID in the access policy storage component;
determining that the second access policy data represents that the fourth intent data is unauthorized for the user ID; and
after determining that the second access policy data represents that
the fourth intent data is unauthorized for the user ID, causing the second device to output second content representing that the third user input is restricted from being further processed.

14. The method of claim 10, 11, 12 or 13, further comprising:
receiving, from the first device, fifth data representing a third user input;
receiving sixth data associated with the first ID;
determining fourth intent data representing the third user input;
determining that the first access policy data represents that the fourth intent data is unauthorized for the first ID;
after determining that the first access policy data represents that the fourth intent data is unauthorized for the first ID, determining fifth intent data associated with the fourth intent data;
determining that the first access policy data represents that the fifth intent data is authorized for the first ID;
generating seventh data representing the fifth intent data; and
causing the first device to output second content corresponding to the seventh data.

## Patentansprüche

1. System, umfassend:
mindestens einen Prozessor; und
mindestens einen Speicher, der Anweisungen umfasst, die bei Ausführung durch den mindestens einen Prozessor das System veranlassen zum:
Empfangen erster Daten, die eine erste Benutzereingabe in natürlicher Sprache darstellen, von einer ersten Vorrichtung;
Empfangen zweiter Daten, die mit einer ersten Kennung (ID) assoziiert sind, die mit der ersten Benutzereingabe assoziiert ist;
Bestimmen erster Absichtsdaten, die eine Bedeutung der natürlichen Sprache der ersten Benutzereingabe darstellen;
Identifizieren erster Zugriffsrichtliniendaten wenigstens zum Teil basierend auf der ersten ID in einer Zugriffsrichtlinienspeicherkomponente;
Bestimmen, dass die ersten Zugriffsrichtliniendaten darstellen, dass die ersten Absichtsdaten für die erste ID nicht autorisiert sind; und
Veranlassen der ersten Vorrichtung, ersten Inhalt auszugeben, der darstellt, dass die erste Benutzereingabe nicht weiterverarbeitet werden darf, nach dem Bestimmen, dass die ersten Zugriffsrichtliniendaten darstellen, dass die ersten Absichtsdaten für die erste ID nicht autorisiert sind;
Empfangen dritter Daten, die eine zweite Benutzereingabe darstellen, von der ersten Vorrichtung;
Empfangen vierter Daten, die mit der ersten ID assoziiert sind;
Bestimmen zweiter Absichtsdaten, die die zweite Benutzereingabe darstellen, wobei die zweiten Absichtsdaten mit einem ersten Vertrauenswert assoziiert sind;
Bestimmen dritter Absichtsdaten, die die zweite Benutzereingabe darstellen, wobei die dritten Absichtsdaten mit einem zweiten Vertrauenswert assoziiert sind, wobei der zweite Vertrauenswert kleiner als der erste Vertrauenswert ist;
Bestimmen, dass die ersten Zugriffsrichtliniendaten darstellen, dass die zweiten Absichtsdaten für die erste ID nicht autorisiert sind, wenigstens zum Teil basierend darauf, dass der erste Vertrauenswert größer als der zweite Vertrauenswert ist;
Bestimmen, dass der zweite Vertrauenswert eine Vertrauenswertschwelle einhält, nach dem Bestimmen, dass die ersten Zugriffsrichtliniendaten darstellen, dass die zweiten Absichtsdaten für die erste ID nicht autorisiert sind; und
Bestimmen, dass die ersten Zugriffsrichtliniendaten darstellen, dass die dritten Absichtsdaten für die erste ID autorisiert sind, nach dem Bestimmen, dass der zweite Vertrauenswert die Vertrauenswertschwelle einhält.

2. System nach Anspruch 1, wobei der mindestens eine Speicher ferner Anweisungen umfasst, die bei Ausführung durch den mindestens einen Prozessor das System ferner veranlassen zum:
Empfangen fünfter Daten, die eine dritte Benutzereingabe darstellen, von der ersten Vorrichtung;
Empfangen sechster Daten, die mit der ersten ID assoziiert sind;
Bestimmen vierter Absichtsdaten, die die dritte Benutzereingabe darstellen;
Bestimmen, dass die ersten Zugriffsrichtliniendaten darstellen, dass die vierten Absichtsdaten für die erste ID autorisiert sind; und
Ausführen in Bezug auf die vierten Absichtsdaten nach dem Bestimmen, dass die ersten Zugriffsrichtliniendaten darstellen, dass die vierten Absichtsdaten für die erste ID autorisiert sind.

3. System nach Anspruch 1 oder 2, wobei der mindestens eine Speicher ferner Anweisungen umfasst, die bei Ausführung durch den mindestens einen Prozessor das System ferner veranlassen zum:
Empfangen fünfter Daten, die einer dritten Benutzereingabe entsprechen, von der ersten Vorrichtung;
Bestimmen, dass die dritte Benutzereingabe einer Angabe entspricht, die ersten Absichtsdaten an ein erstes Speechlet zu senden, das mit den ersten Absichtsdaten assoziiert und zum Durchführen einer oder mehrerer Aktionen konfiguriert ist; Bestimmen von Charakteristiken, die die dritte Benutzereingabe darstellen;
Bestimmen, dass die Charakteristiken gespeicherten Charakteristiken entsprechen, die mit einer Benutzer-ID assoziiert sind;
Bestimmen, dass die Benutzer-ID einem erwachsenen Benutzer entspricht; und
Senden der ersten Absichtsdaten an das erste Speechlet, um eine erste Absicht auszuführen, wenigstens zum Teil basierend auf der Angabe und der Benutzer-ID, die einem erwachsenen Benutzer entspricht.

4. System nach Anspruch 1, 2 oder 3, wobei der mindestens eine Speicher ferner Anweisungen umfasst, die bei Ausführung durch den mindestens einen Prozessor das System ferner veranlassen zum:
Empfangen fünfter Daten, die eine dritte Benutzereingabe darstellen, von einer zweiten Vorrichtung;
Bestimmen vierter Absichtsdaten, die die dritte Benutzereingabe darstellen;
Bestimmen von Charakteristiken, die die fünften Daten darstellen;
Bestimmen, dass die Charakteristiken gespeicherten Charakteristiken entsprechen, die mit einer Benutzer-ID assoziiert sind;
Identifizieren zweiter Zugriffsrichtliniendaten, die mit der Benutzer-ID assoziiert sind, in der Zugriffsrichtlinienspeicherkomponente;
Bestimmen, dass die zweiten Zugriffsrichtliniendaten darstellen, dass die vierten Absichtsdaten für die erste ID nicht autorisiert sind; und
Veranlassen der zweiten Vorrichtung, zweiten Inhalt auszugeben, der darstellt, dass die dritte Benutzereingabe nicht weiterverarbeitet werden darf, nach dem Bestimmen, dass die zweiten Zugriffsrichtliniendaten darstellen, dass die vierten Absichtsdaten für die Benutzer-ID nicht autorisiert sind.

5. System nach Anspruch 1, 2, 3 oder 4, wobei der mindestens eine Speicher ferner Anweisungen umfasst, die bei Ausführung durch den mindestens einen Prozessor das System ferner veranlassen zum:
Empfangen fünfter Daten, die eine dritte Benutzereingabe darstellen, von der ersten Vorrichtung;
Empfangen sechster Daten, die mit der ersten ID assoziiert sind;
Bestimmen einer Speechletkomponente, die mit der dritten Benutzereingabe assoziiert und zum Durchführen einer oder mehrerer Aktionen konfiguriert ist;
Bestimmen vierter Absichtsdaten, die die dritte Benutzereingabe darstellen;
Bestimmen, dass die ersten Zugriffsrichtliniendaten darstellen, dass die Speechletkomponente zur Verarbeitung in Bezug auf die von der ersten Vorrichtung empfangene Benutzereingabe autorisiert ist; und
Senden der vierten Absichtsdaten an die Speechletkomponente, um eine zweite Absicht auszuführen, nach dem Bestimmen, dass die zweiten Zugriffsrichtliniendaten darstellen, dass die Speechletkomponente zur Verarbeitung in Bezug auf die von der ersten Vorrichtung empfangene Benutzereingabe nicht autorisiert ist.

6. System nach Anspruch 1, 2, 3, 4 oder 5, wobei der mindestens eine Speicher ferner Anweisungen umfasst, die bei Ausführung durch den mindestens einen Prozessor das System ferner veranlassen zum:
Empfangen fünfter Daten, die eine dritte Benutzereingabe darstellen, von einer zweiten Vorrichtung;
Bestimmen von Charakteristiken, die die fünften Daten darstellen;
Bestimmen, dass die Charakteristiken gespeicherten Charakteristiken entsprechen, die mit einer ersten Benutzer-ID assoziiert sind;
Bestimmen, dass die erste Benutzer-ID eine ID eines erwachsenen Benutzers ist;
Bestimmen, dass die ID des erwachsenen Benutzers mit einer zweiten Benutzer-ID assoziiert ist;
Bestimmen, dass die zweite Benutzer-ID eine Benutzer-ID eines Kindes ist;
Bestimmen, dass die fünften Daten eine Absicht angeben; und
Erzeugen zweiter Zugriffsrichtliniendaten, die darstellen, dass die Absicht für die zweite Benutzer-ID nicht autorisiert ist.

7. System nach Anspruch 1, 2, 3, 4, 5 oder 6, wobei der mindestens eine Speicher ferner Anweisungen umfasst, die bei Ausführung durch den mindestens einen Prozessor das System ferner veranlassen zum:
Empfangen fünfter Daten, die eine dritte Benutzereingabe darstellen, von einer zweiten Vorrichtung;
Bestimmen vierter Absichtsdaten, die die dritte Benutzereingabe darstellen;
Bestimmen von Charakteristiken, die die fünften Daten darstellen;
Bestimmen, dass die Charakteristiken gespeicherten Charakteristiken entsprechen, die mit einem Benutzeraltersbereich assoziiert sind;
Identifizieren zweiter Zugriffsrichtliniendaten, die mit dem Benutzeraltersbereich assoziiert sind, in der Zugriffsrichtlinienspeicherkomponente;
Bestimmen, dass die zweiten Zugriffsrichtliniendaten darstellen, dass die vierten Absichtsdaten für den Benutzeraltersbereich autorisiert sind; und
Ausführen in Bezug auf die vierten Absichtsdaten nach dem Bestimmen, dass die zweiten Zugriffsrichtliniendaten darstellen, dass die vierten Absichtsdaten für den Benutzeraltersbereich autorisiert sind.

8. System nach Anspruch 1, 2, 3, 4, 5, 6 oder 7, wobei der mindestens eine Speicher ferner Anweisungen umfasst, die bei Ausführung durch den mindestens einen Prozessor das System ferner veranlassen zum:
Empfangen fünfter Daten, die eine dritte Benutzereingabe darstellen, von der ersten Vorrichtung;
Empfangen sechster Daten, die mit der ersten ID assoziiert sind;
Bestimmen vierter Absichtsdaten, die die zweite Benutzereingabe darstellen;
Bestimmen, dass die ersten Zugriffsrichtliniendaten darstellen, dass die vierten Absichtsdaten für die erste ID nicht autorisiert sind; und
Bestimmen fünfter Absichtsdaten, die mit den vierten Absichtsdaten assoziiert sind, nach dem Bestimmen, dass die ersten Zugriffsrichtliniendaten darstellen, dass die vierten Absichtsdaten für die erste ID nicht autorisiert sind;
Bestimmen, dass die ersten Zugriffsrichtliniendaten darstellen, dass die fünften Absichtsdaten für die erste ID autorisiert sind; und
Erzeugen siebter Daten, die die fünften Absichtsdaten darstellen; und
Veranlassen der ersten Vorrichtung, zweiten Inhalt auszugeben, der den siebten Daten entspricht.

9. System nach Anspruch 1, 2, 3, 4, 5, 6, 7 oder 8, wobei der mindestens eine Speicher ferner Anweisungen umfasst, die bei Ausführung durch den mindestens einen Prozessor das System ferner veranlassen zum:
Empfangen fünfter Daten, die eine dritte Benutzereingabe darstellen, von einer zweiten Vorrichtung;
Bestimmen vierter Absichtsdaten, die die dritte Benutzereingabe darstellen;
Bestimmen von Charakteristiken, die die fünften Daten darstellen;
Bestimmen, dass die Charakteristiken gespeicherten Charakteristiken entsprechen, die mit einer Benutzer-ID assoziiert sind;
Bestimmen sechster Daten, die ein Alter eines Benutzers darstellen, in Benutzerprofildaten, die mit der Benutzer-ID assoziiert;
Senden an eine Speechletkomponente, die mit der dritten Benutzereingabe assoziiert und zum Durchführen einer oder mehrerer Aktionen konfiguriert ist:
der vierten Absichtsdaten und
siebter Daten, die das Alter darstellen.

10. Verfahren, umfassend:
Empfangen erster Daten, die eine erste Benutzereingabe in natürlicher Sprache darstellen, von einer ersten Vorrichtung;
Empfangen zweiter Daten, die mit einer ersten Kennung (ID) assoziiert sind, die mit der ersten Benutzereingabe assoziiert ist;
Bestimmen erster Absichtsdaten, die eine Bedeutung der natürlichen Sprache der ersten Benutzereingabe darstellen;
Identifizieren erster Zugriffsrichtliniendaten wenigstens zum Teil basierend auf der ersten ID in einer Zugriffsrichtlinienspeicherkomponente;
Bestimmen, dass die ersten Zugriffsrichtliniendaten darstellen, dass die ersten Absichtsdaten für die erste ID nicht autorisiert sind; und
Veranlassen der ersten Vorrichtung, ersten Inhalt auszugeben, der darstellt, dass die erste Benutzereingabe nicht weiterverarbeitet werden darf, nach dem Bestimmen, dass die ersten Zugriffsrichtliniendaten darstellen, dass die ersten Absichtsdaten für die erste ID nicht autorisiert sind;
Empfangen dritter Daten, die eine zweite Benutzereingabe darstellen, von der ersten Vorrichtung;
Empfangen vierter Daten, die mit der ersten ID assoziiert sind;
Bestimmen zweiter Absichtsdaten, die die zweite Benutzereingabe darstellen, wobei die zweiten Absichtsdaten mit einem ersten Vertrauenswert assoziiert sind;
Bestimmen dritter Absichtsdaten, die die zweite Benutzereingabe darstellen, wobei die dritten Absichtsdaten mit einem zweiten Vertrauenswert assoziiert sind, wobei der zweite Vertrauenswert kleiner als der erste Vertrauenswert ist;
Bestimmen, dass die ersten Zugriffsrichtliniendaten darstellen, dass die zweiten Absichtsdaten für die erste ID nicht autorisiert sind, wenigstens zum Teil basierend darauf, dass der erste Vertrauenswert größer als der zweite Vertrauenswert ist;
Bestimmen, dass der zweite Vertrauenswert eine Vertrauenswertschwelle einhält, nach dem Bestimmen, dass die ersten Zugriffsrichtliniendaten darstellen, dass die zweiten Absichtsdaten für die erste ID nicht autorisiert sind; und
Bestimmen, dass die ersten Zugriffsrichtliniendaten darstellen, dass die dritten Absichtsdaten für die erste ID autorisiert sind, nach dem Bestimmen, dass der zweite Vertrauenswert die Vertrauenswertschwelle einhält.

11. Verfahren nach Anspruch 10, ferner umfassend:
Empfangen fünfter Daten, die eine dritte Benutzereingabe darstellen, von der ersten Vorrichtung;
Empfangen sechster Daten, die mit der ersten ID assoziiert sind;
Bestimmen vierter Absichtsdaten, die die dritte Benutzereingabe darstellen;
Bestimmen, dass die ersten Zugriffsrichtliniendaten darstellen, dass die vierten Absichtsdaten für die erste ID autorisiert sind; und
Ausführen in Bezug auf die vierten Absichtsdaten nach dem Bestimmen, dass die ersten Zugriffsrichtliniendaten darstellen, dass die vierten Absichtsdaten für die erste ID autorisiert sind.

12. Verfahren nach Anspruch 10 oder 11, ferner umfassend:
Empfangen fünfter Daten, die einer dritten Benutzereingabe entsprechen, von der ersten Vorrichtung;
Bestimmen, dass die dritte Benutzereingabe einer Angabe entspricht, die ersten Absichtsdaten an ein erstes Speechlet zu senden, das mit den ersten Absichtsdaten assoziiert und zum Durchführen einer oder mehrerer Aktionen konfiguriert ist;
Bestimmen von Charakteristiken, die die dritte Benutzereingabe darstellen;
Bestimmen, dass die Charakteristiken gespeicherten Charakteristiken entsprechen, die mit einer Benutzer-ID assoziiert sind;
Bestimmen, dass die Benutzer-ID einem erwachsenen Benutzer entspricht; und
Senden der ersten Absichtsdaten an das erste Speechlet, um eine erste Absicht auszuführen, wenigstens zum Teil basierend auf der Angabe und der Benutzer-ID, die einem erwachsenen Benutzer entspricht.

13. Verfahren nach Anspruch 10, 11 oder 12, ferner umfassend:
Empfangen fünfter Daten, die eine dritte Benutzereingabe darstellen, von einer zweiten Vorrichtung;
Bestimmen vierter Absichtsdaten, die die dritte Benutzereingabe darstellen;
Bestimmen von Charakteristiken, die die fünften Daten darstellen;
Bestimmen, dass die Charakteristiken gespeicherten Charakteristiken entsprechen, die mit einer Benutzer-ID assoziiert sind;
Identifizieren zweiter Zugriffsrichtliniendaten, die mit der Benutzer-ID assoziiert sind, in der Zugriffsrichtlinienspeicherkomponente;
Bestimmen, dass die zweiten Zugriffsrichtliniendaten darstellen, dass die vierten Absichtsdaten für die erste ID nicht autorisiert sind; und
Veranlassen der zweiten Vorrichtung, zweiten Inhalt auszugeben, der darstellt, dass die dritte Benutzereingabe nicht weiterverarbeitet werden darf, nach dem Bestimmen, dass die zweiten Zugriffsrichtliniendaten darstellen, dass die vierten Absichtsdaten für die Benutzer-ID nicht autorisiert sind.

14. Verfahren nach Anspruch 10, 11, 12 oder 13, ferner umfassend:
Empfangen fünfter Daten, die eine dritte Benutzereingabe darstellen, von der ersten Vorrichtung;
Empfangen sechster Daten, die mit der ersten ID assoziiert sind;
Bestimmen vierter Absichtsdaten, die die dritte Benutzereingabe darstellen;
Bestimmen, dass die ersten Zugriffsrichtliniendaten darstellen, dass die vierten Absichtsdaten für die erste ID nicht autorisiert sind; und
Bestimmen fünfter Absichtsdaten, die mit den vierten Absichtsdaten assoziiert sind, nach dem Bestimmen, dass die ersten Zugriffsrichtliniendaten darstellen, dass die vierten Absichtsdaten für die erste ID nicht autorisiert sind;
Bestimmen, dass die ersten Zugriffsrichtliniendaten darstellen, dass die fünften Absichtsdaten für die erste ID autorisiert sind; und
Erzeugen siebter Daten, die die fünften Absichtsdaten darstellen; und
Veranlassen der ersten Vorrichtung, zweiten Inhalt auszugeben, der den siebten Daten entspricht.

## Revendications

1. Système comprenant :
au moins un processeur ; et
au moins une mémoire comprenant des instructions qui, lorsqu'elles sont exécutées par l'au moins un processeur, amènent le système à :
recevoir, en provenance d'un premier dispositif, des premières données représentant une première entrée d'utilisateur dans un langage naturel ;
recevoir des deuxièmes données associées à un premier identifiant (ID) associé à la première entrée d'utilisateur ;
déterminer des premières données d'intention représentant une signification du langage naturel de la première entrée d'utilisateur ;
identifier des premières données de politique d'accès sur la base au moins en partie du premier ID dans un composant de stockage de politique d'accès ;
déterminer que les premières données de politique d'accès représentent le fait que les premières données d'intention ne sont pas autorisées pour le premier ID ; et
après détermination du fait que les premières données de politique d'accès représentent le fait que les premières données d'intention ne sont pas autorisées pour le premier ID, commander le premier dispositif pour qu'il émette un premier contenu représentant le fait que la première entrée d'utilisateur ne peut pas être traitée davantage ;
recevoir, en provenance du premier dispositif, des troisièmes données représentant une deuxième entrée d'utilisateur ;
recevoir des quatrièmes données associées au premier ID ; déterminer des deuxièmes données d'intention représentant la deuxième entrée d'utilisateur, les deuxièmes données d'intention étant associées à un premier score de confiance ;
déterminer des troisièmes données d'intention représentant la deuxième entrée d'utilisateur, les troisièmes données d'intention étant associées à un deuxième score de confiance, le deuxième score de confiance étant inférieur au premier score de confiance ;
sur la base au moins en partie du fait que le premier score de confiance est supérieur au deuxième score de confiance, déterminer que les premières données de politique d'accès représentent le fait que les deuxièmes données d'intention ne sont pas autorisées pour le premier ID ;
après détermination du fait que les premières données de politique d'accès représentent le fait que les deuxièmes données d'intention ne sont pas autorisées pour le premier ID, déterminer que le deuxième score de confiance satisfait à un seuil de score de confiance ; et
après détermination du fait que le deuxième score de confiance satisfait à un seuil de score de confiance, déterminer que les premières données de politique d'accès représentent le fait que les troisièmes données d'intention sont autorisées pour le premier ID.

2. Système selon la revendication 1, dans lequel l'au moins une mémoire comprend en outre des instructions qui, lorsqu'elles sont exécutées par l'au moins un processeur, amènent en outre le système à :
recevoir, en provenance du premier dispositif, des cinquièmes données représentant une troisième entrée d'utilisateur ;
recevoir des sixièmes données associées au premier ID ;
déterminer des quatrièmes données d'intention représentant la troisième entrée d'utilisateur ;
déterminer que les premières données de politique d'accès représentent le fait que les quatrièmes données d'intention sont autorisées pour le premier ID ; et
après détermination du fait que les premières données de politique d'accès représentent le fait que les quatrièmes données d'intention sont autorisées pour le premier ID, exécuter une action selon les quatrièmes données d'intention.

3. Système selon la revendication 1 ou 2, dans lequel l'au moins une mémoire comprend en outre des instructions qui, lorsqu'elles sont exécutées par l'au moins un processeur, amènent en outre le système à :
recevoir, en provenance du premier dispositif, des cinquièmes données correspondant à une troisième entrée d'utilisateur ;
déterminer que la troisième entrée d'utilisateur correspond à une indication d'envoi des premières données d'intention à une première application vocale associée aux premières données d'intention et configurée pour exécuter une ou plusieurs actions ; déterminer des caractéristiques représentant la troisième entrée d'utilisateur ;
déterminer que les caractéristiques correspondent à des caractéristiques stockées associées à un ID d'utilisateur ;
déterminer que l'ID d'utilisateur correspond à un utilisateur adulte ; et
sur la base de l'indication et de l'ID d'utilisateur correspondant à un utilisateur adulte, envoyer les premières données d'intention à la première application vocale pour exécuter une première intention.

4. Système selon la revendication 1, 2 ou 3, dans lequel l'au moins une mémoire comprend en outre des instructions qui, lorsqu'elles sont exécutées par l'au moins un processeur, amènent en outre le système à :
recevoir, en provenance d'un deuxième dispositif, des cinquièmes données représentant une troisième entrée d'utilisateur ;
déterminer des quatrièmes données d'intention représentant la troisième entrée d'utilisateur ;
déterminer des caractéristiques représentant les cinquièmes données ;
déterminer que les caractéristiques correspondent à des caractéristiques stockées associées à un ID d'utilisateur ;
identifier des deuxièmes données de politique d'accès associées à l'ID d'utilisateur dans le composant de stockage de politique d'accès ;
déterminer que les deuxièmes données de politique d'accès représentent le fait que les quatrièmes données d'intention ne sont pas autorisées pour l'ID d'utilisateur ; et
après détermination du fait que les deuxièmes données de politique d'accès représentent le fait que les quatrièmes données d'intention ne sont pas autorisées pour l'ID d'utilisateur, commander le deuxième dispositif pour qu'il émette un deuxième contenu représentant le fait que la troisième entrée d'utilisateur ne peut pas être traitée davantage.

5. Système selon la revendication 1, 2, 3 ou 4, dans lequel l'au moins une mémoire comprend en outre des instructions qui, lorsqu'elles sont exécutées par l'au moins un processeur, amènent en outre le système à :
recevoir, en provenance du premier dispositif, des cinquièmes données représentant une troisième entrée d'utilisateur ;
recevoir des sixièmes données associées au premier ID ;
déterminer un composant d'application vocale associé à la troisième entrée d'utilisateur et configuré pour exécuter une ou plusieurs actions ;
déterminer des quatrièmes données d'intention représentant la troisième entrée d'utilisateur ;
déterminer que les premières données de politique d'accès représentent le fait que le composant d'application vocale est autorisé à agir selon l'entrée d'utilisateur reçue du premier dispositif ; et
après détermination du fait que les deuxièmes données de politique d'accès représentent le fait que le composant d'application vocale n'est pas autorisé à agir selon l'entrée d'utilisateur reçue du premier dispositif, envoyer les quatrièmes données d'intention au composant d'application vocale pour qu'il exécute une deuxième intention.

6. Système selon la revendication 1, 2, 3, 4 ou 5, dans lequel l'au moins une mémoire comprend en outre des instructions qui, lorsqu'elles sont exécutées par l'au moins un processeur, amènent en outre le système à :
recevoir, en provenance d'un deuxième dispositif, des cinquièmes données représentant une troisième entrée d'utilisateur ;
déterminer des caractéristiques représentant les cinquièmes données ;
déterminer que les caractéristiques correspondent à des caractéristiques stockées associées à un premier ID d'utilisateur ;
déterminer que le premier ID d'utilisateur est un ID d'utilisateur adulte ;
déterminer que l'ID d'utilisateur adulte est associé à un deuxième ID d'utilisateur ;
déterminer que le deuxième ID d'utilisateur est un ID d'utilisateur enfant ;
déterminer que les cinquièmes données indiquent une intention ; et
générer des deuxièmes données de politique d'accès représentant le fait que l'intention n'est pas autorisée pour le deuxième ID d'utilisateur.

7. Système selon la revendication 1, 2, 3, 4, 5 ou 6, dans lequel l'au moins une mémoire comprend en outre des instructions qui, lorsqu'elles sont exécutées par l'au moins un processeur, amènent en outre le système à :
recevoir, en provenance d'un deuxième dispositif, des cinquièmes données représentant une troisième entrée d'utilisateur ;
déterminer des quatrièmes données d'intention représentant la troisième entrée d'utilisateur ;
déterminer des caractéristiques représentant les cinquièmes données ;
déterminer que les caractéristiques correspondent à des caractéristiques stockées associées à une tranche d'âge d'utilisateur ;
identifier des deuxièmes données de politique d'accès associées à la tranche d'âge d'utilisateur dans le composant de stockage de politique d'accès ;
déterminer que les deuxièmes données de politique d'accès représentent le fait que les quatrièmes données d'intention sont autorisées pour la tranche d'âge d'utilisateur ; et
après détermination du fait que les premières données de politique d'accès représentent le fait que les quatrièmes données d'intention sont autorisées pour la tranche d'âge d'utilisateur, exécuter une action selon les quatrièmes données d'intention.

8. Système selon la revendication 1, 2, 3, 4, 5, 6 ou 7, dans lequel l'au moins une mémoire comprend en outre des instructions qui, lorsqu'elles sont exécutées par l'au moins un processeur, amènent en outre le système à :
recevoir, en provenance du premier dispositif, des cinquièmes données représentant une troisième entrée d'utilisateur ;
recevoir des sixièmes données associées au premier ID ;
déterminer des quatrièmes données d'intention représentant la deuxième entrée d'utilisateur ;
déterminer que les premières données de politique d'accès représentent le fait que les quatrièmes données d'intention ne sont pas autorisées pour le premier ID ;
après détermination du fait que les premières données de politique d'accès représentent le fait que les quatrièmes données d'intention ne sont pas autorisées pour le premier ID, exécuter des cinquièmes données d'intention associées aux quatrièmes données d'intention ;
déterminer que les premières données de politique d'accès représentent le fait que les cinquièmes données d'intention sont autorisées pour le premier ID ;
générer des septièmes données représentant les cinquièmes données d'intention ; et
commander le premier dispositif pour qu'il émette un deuxième contenu correspondant aux septièmes données.

9. Système selon la revendication 1, 2, 3, 4, 5, 6, 7 ou 8, dans lequel l'au moins une mémoire comprend en outre des instructions qui, lorsqu'elles sont exécutées par l'au moins un processeur, amènent en outre le système à :
recevoir, en provenance d'un deuxième dispositif, des cinquièmes données représentant une troisième entrée d'utilisateur ;
déterminer des quatrièmes données d'intention représentant la troisième entrée d'utilisateur ;
déterminer des caractéristiques représentant les cinquièmes données ;
déterminer que les caractéristiques correspondent à des caractéristiques stockées associées à un ID d'utilisateur ;
déterminer, dans des données de profil utilisateur associées à l'ID d'utilisateur, des sixièmes données représentant un âge d'un utilisateur ; et
envoyer à un composant d'application vocale associé à la troisième entrée d'utilisateur et configuré pour exécuter une ou plusieurs actions :
les quatrièmes données d'intention, et
des septièmes données représentant l'âge.

10. Procédé, comprenant :
la réception, en provenance d'un premier dispositif, de premières données représentant une première entrée d'utilisateur dans un langage naturel ;
la réception de deuxièmes données associées à un premier identifiant (ID) associé à la première entrée d'utilisateur ;
la détermination de premières données d'intention représentant une signification du langage naturel de la première entrée d'utilisateur ;
l'identification de premières données de politique d'accès sur la base au moins en partie du premier ID dans un composant de stockage de politique d'accès ;
la détermination du fait que les premières données de politique d'accès représentent le fait que les premières données d'intention ne sont pas autorisées pour le premier ID ; et
après détermination du fait que les premières données de politique d'accès représentent le fait que les premières données d'intention ne sont pas autorisées pour le premier ID, la commande du premier dispositif pour qu'il émette un premier contenu représentant le fait que la première entrée d'utilisateur ne peut pas être traitée davantage ;
la réception, en provenance du premier dispositif, de troisièmes données représentant une deuxième entrée d'utilisateur ;
la réception de quatrièmes données associées au premier ID ;
la détermination de deuxièmes données d'intention représentant la deuxième entrée d'utilisateur, les deuxièmes données d'intention étant associées à un premier score de confiance ;
la détermination de troisièmes données d'intention représentant la deuxième entrée d'utilisateur, les troisièmes données d'intention étant associées à un deuxième score de confiance, le deuxième score de confiance étant inférieur au premier score de confiance ;
sur la base au moins en partie du fait que le premier score de confiance est supérieur au deuxième score de confiance, la détermination du fait que les premières données de politique d'accès représentent le fait que les deuxièmes données d'intention ne sont pas autorisées pour le premier ID ;
après détermination du fait que les premières données de politique d'accès représentent le fait que les deuxièmes données d'intention ne sont pas autorisées pour le premier ID, la détermination du fait que le deuxième score de confiance satisfait à un seuil de score de confiance ; et
après détermination du fait que le deuxième score de confiance satisfait à un seuil de score de confiance, la détermination du fait que les premières données de politique d'accès représentent le fait que les troisièmes données d'intention sont autorisées pour le premier ID.

11. Procédé selon la revendication 10, comprenant en outre :
la réception, en provenance du premier dispositif, de cinquièmes données représentant une troisième entrée d'utilisateur ;
la réception de sixièmes données associées au premier ID ;
la détermination de quatrièmes données d'intention représentant la troisième entrée d'utilisateur ;
la détermination du fait que les premières données de politique d'accès représentent le fait que les quatrièmes données d'intention sont autorisées pour le premier ID ; et
après détermination du fait que les premières données de politique d'accès représentent le fait que les quatrièmes données d'intention sont autorisées pour le premier ID, l'exécution d'une action selon les quatrièmes données d'intention.

12. Procédé selon la revendication 10 ou 11, comprenant en outre :
la réception, en provenance du premier dispositif, de cinquièmes données correspondant à une troisième entrée d'utilisateur ;
la détermination du fait que la troisième entrée d'utilisateur correspond à une indication d'envoi des premières données d'intention à une première application vocale associée aux premières données d'intention et configurée pour exécuter une ou plusieurs actions ;
la détermination de caractéristiques représentant la troisième entrée d'utilisateur ;
la détermination du fait que les caractéristiques correspondent à des caractéristiques stockées associées à un ID d'utilisateur ;
la détermination du fait que l'ID d'utilisateur correspond à un utilisateur adulte ; et
sur la base de l'indication et de l'ID d'utilisateur correspondant à un utilisateur adulte, l'envoi des premières données d'intention à la première application vocale pour exécuter une première intention.

13. Procédé selon la revendication 10, 11 ou 12, comprenant en outre :
la réception, en provenance d'un deuxième dispositif, de cinquièmes données représentant une troisième entrée d'utilisateur ;
la détermination de quatrièmes données d'intention représentant la troisième entrée d'utilisateur ;
la détermination de caractéristiques représentant les cinquièmes données ;
la détermination du fait que les caractéristiques correspondent à des caractéristiques stockées associées à un ID d'utilisateur ;
l'identification de deuxièmes données de politique d'accès associées à l'ID d'utilisateur dans le composant de stockage de politique d'accès ;
la détermination du fait que les deuxièmes données de politique d'accès représentent le fait que les quatrièmes données d'intention ne sont pas autorisées pour l'ID d'utilisateur ; et
après détermination du fait que les deuxièmes données de politique d'accès représentent le fait que les quatrièmes données d'intention ne sont pas autorisées pour l'ID d'utilisateur, la commande du deuxième dispositif pour qu'il émette un deuxième contenu représentant le fait que la troisième entrée d'utilisateur ne peut pas être traitée davantage.

14. Procédé selon la revendication 10, 11, 12 ou 13, comprenant en outre :
la réception, en provenance du premier dispositif, de cinquièmes données représentant une troisième entrée d'utilisateur ;
la réception de sixièmes données associées au premier ID ;
la détermination de quatrièmes données d'intention représentant la troisième entrée d'utilisateur ;
la détermination du fait que les premières données de politique d'accès représentent le fait que les quatrièmes données d'intention ne sont autorisées pas pour le premier ID ; et
après détermination du fait que les premières données de politique d'accès représentent le fait que les quatrièmes données d'intention ne sont pas autorisées pour le premier ID, la détermination de cinquièmes données d'intention associées aux quatrièmes données d'intention ;
la détermination du fait que les premières données de politique d'accès représentent le fait que les cinquièmes données d'intention sont autorisées pour le premier ID ;
la génération de septièmes données représentant les cinquièmes données d'intention ; et
la commande du premier dispositif pour qu'il émette un deuxième contenu correspondant aux septièmes données.
